(19) Europäisches Patentamt / European Patent Office / Office européen des brevets

(11) **EP 4 320 606 B1**

(12) **EUROPEAN PATENT SPECIFICATION**

(45) Date of publication and mention
of the grant of the patent:
**11.03.2026 Bulletin 2026/11**

(21) Application number: **22719496.6**

(22) Date of filing: **09.04.2022**

(51) International Patent Classification (IPC):
**G06V 40/40** *(2022.01)*    **G06V 10/82** *(2022.01)*
**G06V 40/12** *(2022.01)*    **G06V 10/80** *(2022.01)*
**G06F 21/32** *(2013.01)*    **G06F 21/45** *(2013.01)*
**G06F 21/55** *(2013.01)*    **G06V 40/50** *(2022.01)*
**H04L 9/40** *(2022.01)*

(52) Cooperative Patent Classification (CPC):
**G06F 21/32; G06F 21/45; G06F 21/552;**
**G06V 10/806; G06V 10/82; G06V 40/1365;**
**G06V 40/1388; G06V 40/40; G06V 40/50;**
**H04L 63/0861; H04L 63/1466**

(86) International application number:
**PCT/US2022/071653**

(87) International publication number:
**WO 2022/217294 (13.10.2022 Gazette 2022/41)**

(54) **PERSONALIZED BIOMETRIC ANTI-SPOOFING PROTECTION USING MACHINE LEARNING AND ENROLLMENT DATA**

PERSONALISIERTER BIOMETRISCHER SCHUTZ GEGEN SPOOFING UNTER VERWENDUNG VON MASCHINENLERN- UND REGISTRIERUNGSDATEN

PROTECTION BIOMÉTRIQUE PERSONNALISÉE ANTI-USURPATION UTILISANT L'APPRENTISSAGE AUTOMATIQUE ET DES DONNÉES D'INSCRIPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2021 US 202163173267 P**
**08.04.2022 US 202217658573**

(43) Date of publication of application:
**14.02.2024 Bulletin 2024/07**

(73) Proprietor: **QUALCOMM Incorporated**
**San Diego, CA 92121-1714 (US)**

(72) Inventors:
• **BELLI, Davide**
  **San Diego, California 92121-1714 (US)**
• **MAJOR, Bence**
  **San Diego, California 92121-1714 (US)**
• **DIJKMAN, Daniel Hendricus Franciscus**
  **San Diego, California 92121-1714 (US)**
• **PORIKLI, Fatih Murat**
  **San Diego, California 92121-1714 (US)**

(74) Representative: **Carstens, Dirk Wilhelm**
**Wagner & Geyer Partnerschaft mbB**
**Patent- und Rechtsanwälte**
**Gewürzmühlstraße 5**
**80538 München (DE)**

(56) References cited:
**US-A1- 2020 175 290    US-A1- 2020 394 289**
**US-A1- 2021 009 080**

EP 4 320 606 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

This application claims priority to U.S. Patent Application No. 17/658,573, filed April 8, 2022, entitled "Personalized Biometric Anti-Spoofing Protection Using Machine Learning and Enrollment Data" which claims benefit of and priority to U.S. Provisional Patent Application Serial No. 63/173,267, entitled "Personalized Biometric Anti-Spoofing Protection Using Machine Learning and Enrollment Data", filed April 9, 2021.

**INTRODUCTION**

Aspects of the present disclosure relate to machine learning and, more particularly, to using artificial neural networks to protect against biometric credential spoofing in biometric authentication systems.

In various computing systems, such as on smartphones, tablet computers, or the like, users may authenticate and gain access to these computing systems using various techniques, alone (single factor authentication) or in combination with each other (multifactor authentication). One of these techniques includes the use of biometric data to authenticate a user. Biometric data generally includes information derived from the physical characteristics of a user associated with the biometric data, such as fingerprint data, iris scan data, facial images (e.g., with or without three-dimensional depth data) and the like.

In a biometric authentication system, a user typically enrolls with an authentication service (e.g., executing locally on the device or remotely on a separate computing device) by providing one or more scans of a relevant body part to the authentication service that can be used as a reference data source. For example, in a biometric authentication system in which fingerprints are used to authenticate the user, multiple fingerprint scans may be provided to account for differences in the way a user holds a device, to account for differences between different regions of the finger, and to account for different fingers that may be used in authenticating the user. In another example, in a biometric authentication system in which facial images are used to authenticate the user, multiple facial images captured from multiple angles (e.g., looking straight ahead, looking up, looking down, looking to the sides, etc.) can be provided to account for differences in the way a user looks at a device. When a user attempts to access the device, the user may scan the relevant body part, and the captured image (or representation thereof) may be compared against a reference (e.g., a reference image or representation thereof). If the captured image is a sufficient match to the reference image, access to the device or application may be granted to the user. Otherwise, access to the device or application may be denied, as an insufficient match may indicate that an unauthorized or unknown user is trying to access the device or application.

While biometric authentication systems add additional layers of security to access controlled systems versus passwords or passcodes, techniques exist to circumvent these biometric authentication systems. For example, in fingerprint-based biometric authentication systems, fingerprints can be authenticated based on similarities between ridges and valleys captured in a query image and captured in one or more enrollment images (e.g., through ultrasonic sensors, optical sensors, or the like). Because the general techniques by which these biometric authentication systems authenticate users is known, it may be possible to attack these authentication systems and gain unauthorized access to protected resources using a reproduction of a user's fingerprint. These types of attacks may be referred to as fingerprint "spoofing." In another example, because facial images are widely available (e.g., on the Internet), these images can also be used to attack facial recognition systems.

Accordingly, what is needed are improved techniques for authenticating users through biometric authentication systems.

Attention is drawn to US 2020/394289 A1 relating to a method for biometric verification including obtaining a verification image and extracting a set of verification image features from the verification image. The method also includes processing the set of verification image features and a set of enrollment image features using a convolutional neural network to determine a metric. A determination is then made about whether the verification image matches an enrollment image based on the metric.

Further attention is drawn to US 2021/009080 A1 relating to vehicle door unlocking. A method includes: obtaining a distance between a target object outside a vehicle and the vehicle by means of at least one distance sensor provided in the vehicle; in response to the distance satisfying a predetermined condition, waking up and controlling an image collection module provided in the vehicle to collect a first image of the target object; performing face recognition based on the first image; and in response to successful face recognition, sending a vehicle door unlocking instruction to at least one vehicle door lock of the vehicle.

Additional attention is drawn to US 2020/175290 A1 relating to detecting morphed or averaged images, wherein the morphed or averaged images are synthetically generated images including information from two or more different source images corresponding to two or more subjects. An apparatus includes a feature extraction module for receiving an input image and outputting a set of descriptor feature(s) characteristic of the image and a classifier module configured to allocate the input image either to a first class indicating that the image has been morphed or averaged or a second class indicating that it has not been morphed or averaged, based on the descriptor feature(s). The feature extraction module includes a plurality of neural networks providing complementary descriptor feature(s) to the classifier module. The apparatus further includes a fusion module for combining descriptor feature data from each neural network and transmitting the fused feature data to the classifier module.

## BRIEF SUMMARY

The invention is defined by the appended independent claims. Further embodiments are defined by the appended dependent claims. Certain aspects provide a method for biometric authentication. The method generally includes receiving an image of a biometric data source a user; extracting, through a first artificial neural network, features for at least the received image; combining the extracted features for the at least the received image and a combined feature representation of a plurality of enrollment biometric data source images; determining, using the combined extracted features for the at least the received image and the combined feature representation of the plurality of enrollment biometric data source images as input into a second artificial neural network, whether the received image of the biometric data source for the user is from a real biometric data source or a copy of the real biometric data source; and taking one or more actions to allow or deny the user access to a protected resource based on the determination.

Other aspects provide processing systems configured to perform the aforementioned methods as well as those described herein; non-transitory, computer-readable media comprising instructions that, when executed by one or more processors of a processing system, cause the processing system to perform the aforementioned methods as well as those described herein; a computer program product embodied on a computer-readable storage medium comprising code for performing the aforementioned methods as well as those further described herein; and a processing system comprising means for performing the aforementioned methods, as well as those further described herein.

The following description and the related drawings set forth in detail certain illustrative features of one or more embodiments.

## BRIEF DESCRIPTION OF THE DRAWINGS

The appended figures depict certain aspects of the one or more embodiments and are therefore not to be considered limiting of the scope of this disclosure.

**FIG. 1** depicts an example fingerprint authentication pipeline.

**FIG. 2** illustrates example anti-spoofing protection systems in a fingerprint authentication pipeline.

**FIG. 3** illustrates example operations for fingerprint authentication, according to aspects of the present disclosure.

**FIG. 4** illustrates a fingerprint anti-spoofing protection pipeline in which a query image and enrollment data are used to determine whether the query image is from a real finger, according to aspects of the present disclosure.

**FIG. 5** illustrates example feature extraction pipelines for extracting fingerprint features from query images and enrollment images, according to aspects of the present disclosure.

**FIG. 6** illustrates example feature aggregation pipelines for aggregating fingerprint features extracted from representations of enrollment images into a consolidated feature set, according to aspects of the present disclosure.

**FIG. 7** illustrates example architectures of neural networks that can be used to aggregate features extracted from a plurality of enrollment images, according to aspects of the present disclosure.

**FIGs. 8A** through **8C** illustrate example feature infusion pipelines for combining features extracted from the query images and enrollment images for use in determining whether a query image is from a real finger, according to aspects of the present disclosure.

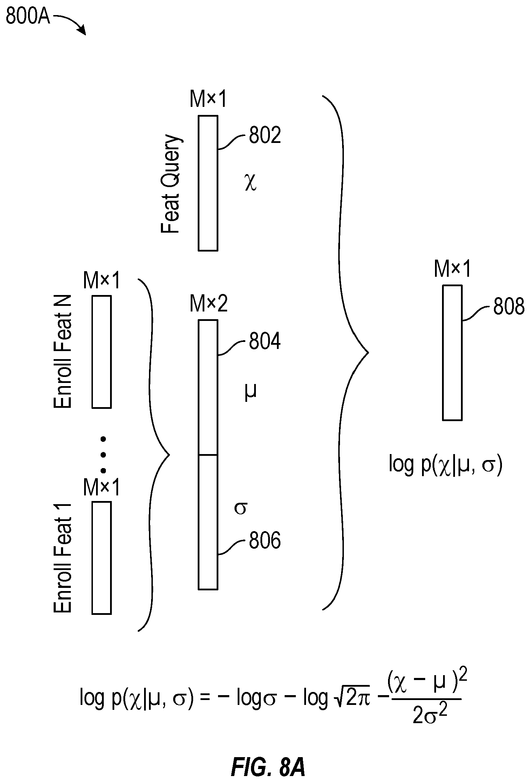

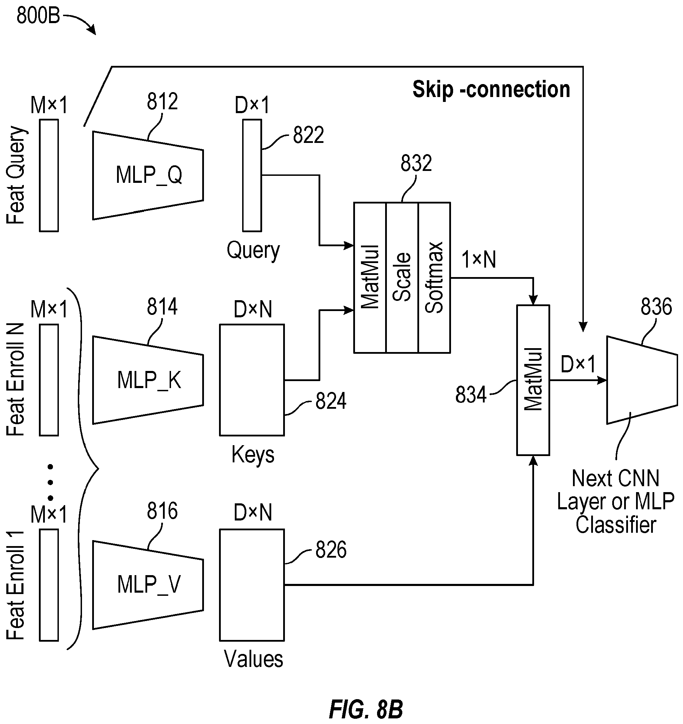

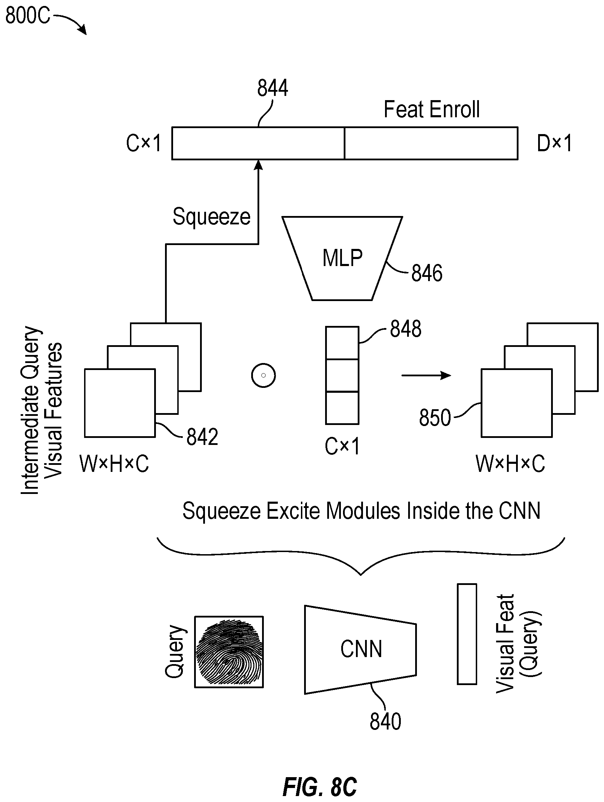

**FIG. 8** illustrates example alignment preprocessing that may be performed on a query image or one or more enrollment images prior to determining whether the query image is from a real finger, according to aspects of the present disclosure.

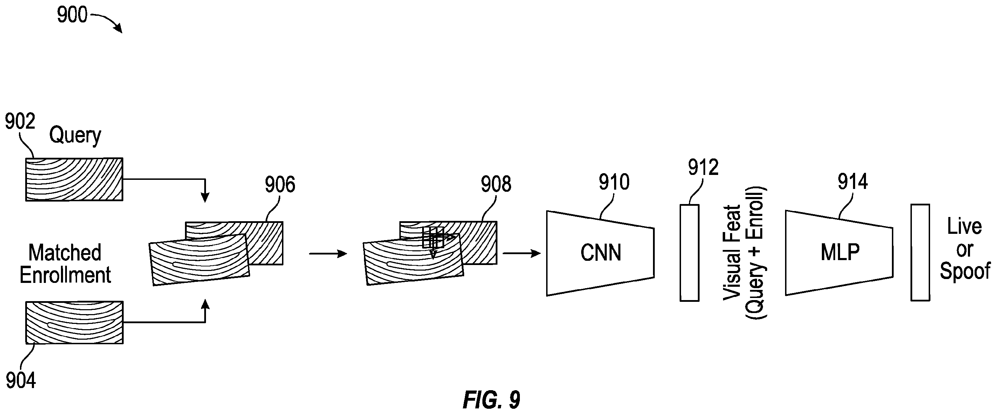

**FIG. 9** illustrates an example implementation of a processing system in which fingerprint authentication and anti-spoofing protection within a fingerprint authentication pipeline can be performed, according to aspects of the present disclosure.

To facilitate understanding, identical reference numerals have been used, where possible, to designate identical elements that are common to the drawings. It is contemplated that elements and features of one embodiment may be beneficially incorporated in other embodiments without further recitation.

## DETAILED DESCRIPTION

Aspects of the present disclosure provide techniques for anti-spoofing protection within a biometric authentication pipeline.

In many biometric security systems, images are generally captured of a biometric characteristic of a user (e.g., a fingerprint image obtained from an image scan or an ultrasonic sensor configured to generate an image based on reflections from ridges and valleys in a fingerprint, face structure derived from a facial scan, iris structure derived from an iris scan, etc.) for use in authenticating the user. The acceptable degree of similarity between a captured image and a reference image may be tailored to meet false acceptance rate (FAR) and false rejection rate (FRR) metrics. The FAR may represent a rate at which a biometric security system incorrectly allows access to a system or application (e.g., to a user other than the user(s) associated with reference image(s) in the biometric security system), and the FRR may represent a rate at which a biometric security system incorrectly blocks access to a system or application. Generally, a false acceptance may constitute a security breach, while a false rejection may be an annoyance. Because biometric security systems are frequently used to allow or disallow access to potentially sensitive information or systems, and because false acceptances are generally dangerous, biometric security systems may typically be configured to minimize the FAR to as close to zero as possible, usually with the tradeoff of an increased FRR.

In some cases, biometric security systems may be fooled into falsely accepting spoofed biometric credentials, which may allow for unauthorized access to protected resources and other security breaches within a computing system. For example, in some fingerprint authentication systems, a fake finger created with a fingerprint lifted from another location can be used to gain unauthorized access to a protected computing resource. These fake fingers may be easily created, for example, using three-dimensional printing or other additive manufacturing processes, gelatin molding, or other processes. In other cases, images or models of a user's face can be used to gain unauthorized access to a protected computing resource protected by a facial recognition system. Because fake biometric data sources may be easily created, biometric authentication systems generally include anti-spoofing protection systems that attempt to distinguish between biometric data from real or fake sources.

*Example Fingerprint Authentication Pipeline*

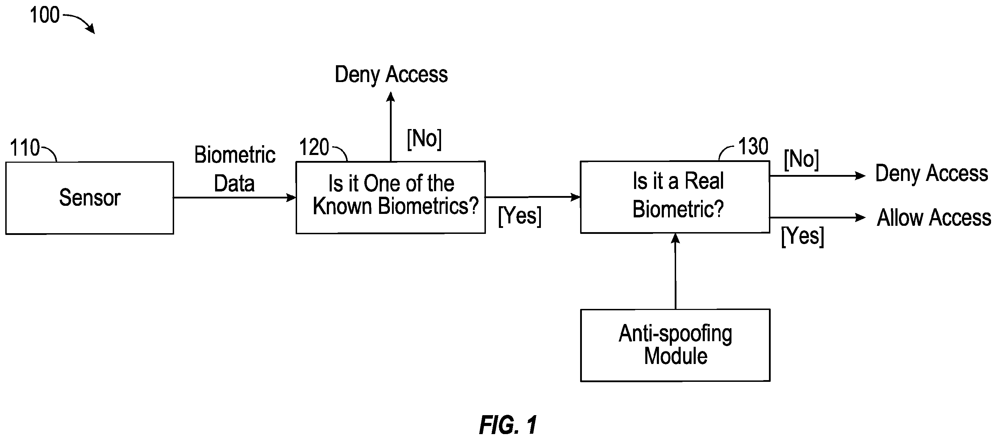

**FIG. 1** illustrates an example biometric authentication pipeline 100, in accordance with certain aspects of the present disclosure. While biometric authentication pipeline 100 is illustrated as a fingerprint authentication pipeline, it should be recognized that biometric authentication pipeline 100 may be also or alternatively used in capturing and authenticating other biometric data, such as facial scans, iris scans, and other types of biometric data.

As illustrated, biometric data, such as an image of a fingerprint, is captured by sensor 110 and provided to a comparator 120, which determines whether the biometric data captured by sensor 110 corresponds to one of a plurality of known sets of biometric data (e.g., whether a captured image of a fingerprint corresponds to a known fingerprint). To determine whether biometric data captured by sensor 110 corresponds to one of a plurality of known sets of biometric data, comparator 120 can compare the captured biometric data (or features derived from) to samples in an enrollment sample set (or features derived therefrom) captured when a user enrolls one or more biometric data sources (e.g., fingers) for use in authenticating the user. Generally, the enrollment image set includes a plurality of images for each biometric data source enrolled in a fingerprint authentication system. For security purposes, however, the actual enrollment images may be stored in a secured region in memory, or a representation of the enrollment images may be stored in lieu of the actual enrollment images to protect against extraction and malicious use of the enrollment images.

Generally, comparator 120 can identify unique physical features within captured biometric data and attempt to match these unique physical features to similar physical features in one of the enrollment samples (e.g., an enrollment image). For example, in a fingerprint authentication system, comparator 120 can identify patterns of ridges and valleys in a fingerprint and/or fingerprint minutiae such as ridge/valley bifurcations or terminations to attempt to match the captured fingerprint to an enrollment image. In another example, in a facial recognition system, comparator 120 can identify various points on a face and identify visual patterns located at these points (e.g., "crows feet" around the eye area, dimples, wrinkles, etc.) in an attempt to match a captured image of a user's face to an enrollment image. In some cases, comparator 120 may apply various transformations to the captured biometric data to attempt to align features in the captured biometric data with similar features in one or more of the images in the enrollment image set. These transformations may include, for example, applying rotational transformations to (i.e., rotating) the captured biometric data, laterally shifting (i.e., translating) the captured biometric data, scaling the captured biometric data to a defined resolution, combining the captured biometric data with one or more of the enrollment images in the enrollment image set to create a composite image, or the like. If comparator 120 determines that the captured biometric data does not match any of the images in the enrollment image set, comparator 120 can determine that the captured biometric data is not from an enrolled user and can deny access to protected computing resources.

Otherwise, if comparator 120 determines that the captured biometric data does match at least one of the images in the enrollment image set, an anti-spoofing protection engine 130 can determine whether the captured biometric data is from a real source or a fake source. If the captured biometric data is from a real source, anti-spoofing protection engine 130 can allow access to the protected computing resources; otherwise, anti-spoofing protection engine 130 can deny allow access to the protected computing resources. Various techniques may be used to determine whether the captured biometric data is from a real source or a fake source. For example, in a fingerprint authentication system, surface conductivity can be used to determine whether the fingerprint image is from a real finger or a fake finger. Because human skin has certain known conductivity characteristics, images captured from sources that do not have these conductivity characteristics may be determined to have been sourced from a fake finger. However, because these techniques are typically performed without reference to the enrollment image set and/or the captured fingerprint image, anti-spoofing protection systems may be defeated through the use of various materials or other technical means that replicate the known anatomical properties of a real biometric data source that could otherwise be used to prevent against spoofing attacks. In another example, in a facial recognition system, depth maps, temperature readings, and other information can be used to determine whether the source is real or fake, based on an assumption that a real source will have a significant amount of three-dimensional data (as opposed to a printed image which will not have a significant amount of three-dimensional data) and may emit a temperature at or near an assumed normal body temperature (e.g., 98.6° F or 37° C).

While **FIG. 1** illustrates a biometric authentication pipeline in which a comparison is performed prior to determining whether the captured biometric data (e.g., captured image of a fingerprint) is from a real source or a fake source, it should be recognized by one of ordinary skill in the art that these operations may be performed in any order or concurrently. That is, within a biometric authentication pipeline, anti-spoofing protection engine 130 can determine whether captured biometric data is from a real source or a fake source prior to comparator 120 determining whether a match exists between the biometric data captured by sensor 110 and one or more images in an enrollment image set.

*Example Anti-Spoofing Protection Systems in a Fingerprint Authentication Pipeline*

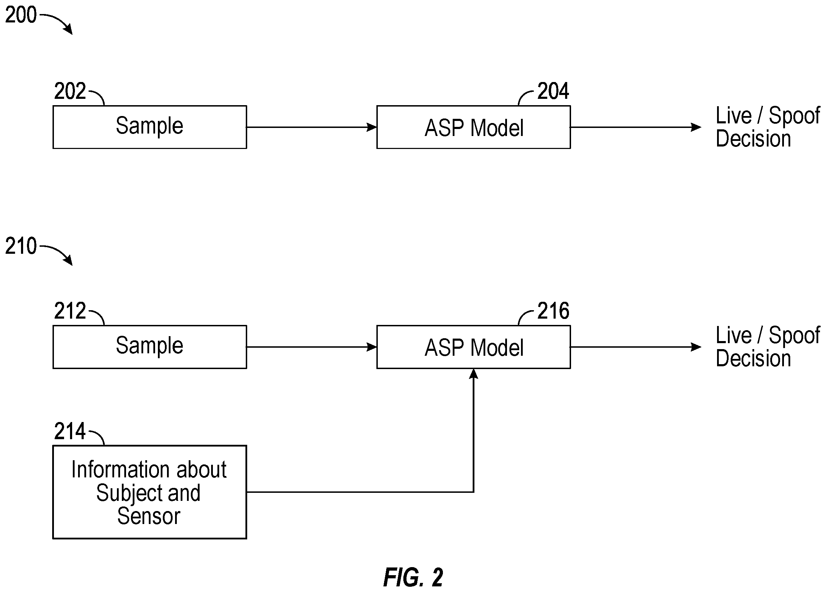

**FIG. 2** illustrates example anti-spoofing protection systems in a fingerprint authentication pipeline. In anti-spoofing protection system 200, a sample 202 captured by a fingerprint sensor (e.g., an ultrasonic sensor, an optical sensor, etc.) may be provided as input into an anti-spoofing protection (ASP) model 204. This anti-spoofing protection model may be trained generically based on a predefined training data set to determine whether the captured sample 202 is from a real finger or a fake finger (e.g., to make a live or spoof decision which may be used in a fingerprint authentication pipeline to determine whether to grant a user access to protected computing resources). Anti-spoofing protection model 204, however, may be inaccurate, as the training data set used to train the anti-spoofing protection model 204 may not account for natural variation between users that may change the characteristics of a sample 202 captured for different users. For example, users may have varying skin characteristics that may affect the data captured in sample 202, such as dry skin, oily skin, or the like. Users with dry skin may, for example, cause generation of a sample 202 with less visual acuity than users with oily skin. Additionally, anti-spoofing protection model 204 may not account for differences between the sensors and/or surface coverings for a sensor used to capture sample 202. For example, sensors may have different levels of acuity or may be disposed underneath cover glass of differing thicknesses, refractivity, or the like. Further, different instances of the same model of sensor may have different characteristics due to manufacturing variability (e.g., in alignment, sensor thickness, glass cover thickness, etc.) and calibration differences resulting therefrom. Still further, some users may cover the sensor used to capture sample 202 with a protective film that can impact the image captured by the sensor. Even still, different sensors may have different spatial resolutions.

To improve the accuracy of anti-spoofing protection in a fingerprint authentication pipeline, aspects of the present disclosure allow for the integration of subject and sensor information into an anti-spoofing protection model 216. As illustrated, in anti-spoofing protection system 210, a sample 212 captured by a fingerprint sensor and information 214 about the subject and/or the sensor may be input into an anti-spoofing protection model 216 trained to predict whether a fingerprint captured in sample 212 is from a real finger or a fake finger. The information about the subject and/or the sensor may be, as discussed in further detail below, be derived from an enrollment image set or information derived from images in an enrollment image set. Because the images in the enrollment image set may generally capture user and device variation, anti-spoofing protection model 216 can be trained to identify whether a sample 212 is from a real finger or a fake finger based on user and device characteristics that may not be captured in a generic training data set. Thus, the accuracy of fingerprint authentication systems in identifying spoofing attacks may be increased, which may increase the security of computing resources protected by fingerprint authentication systems.

Anti-spoofing protection models may also be used in other biometric authentication systems, such as authentication systems that use iris scanning, facial recognition, or other biometric data. As with the anti-spoofing protection model for a fingerprint authentication pipeline discussed above, anti-spoofing protection models may be inaccurate, because the training data set used to train these models may not account for natural variation between users that may change the characteristics of a sample captured for different users. For examples, users may have varying levels of contrast in iris color that may cause the generation of samples with differing levels of visual acuity, may wear glasses or other optics that affect the details captured in a sample, or the like. Further, the anti-spoofing protection models may not account for differences in the cameras, such as resolution, optical formulas, or the like, that can be used to capture samples used in iris or facial recognition systems.

In some aspects, anti-spoofing protection systems may be trained using a training data set generated from a large-scale anti-spoofing data set (e.g., in scenarios in which access to sensors and users for data collection is unavailable). The personalized data set may include data for a number of different users, with each user having a constant number of enrollment images. For example, in a still-image-based anti-spoofing data set, the first $N$ live samples may be selected as an enrollment data set for each user in the anti-spoofing data set, and the remaining live samples and a number of spoof samples randomly obtained from other data sources (e.g., image repositories, data sources on the internet, etc.) may be selected as a set of query samples for training the anti-spoofing protecting systems. In an anti-spoofing data set including video data, the $N$ images used as enrollment data may equidistantly sampled from a selected video clip having illumination changes below a threshold value (e.g., such that the biometric data source is captured in the video with minimal changes in lighting and thus in the quality of the data captured in the video) and with variation in subject pose. Other videos for the user, having a same spatial resolution as the selected video clip, may be treated as associated query data against which the anti-spoofing protection system may be trained.

*Example Methods for Biometric Authentication Using Machine Learning-Based Anti-Spoofing Protection*

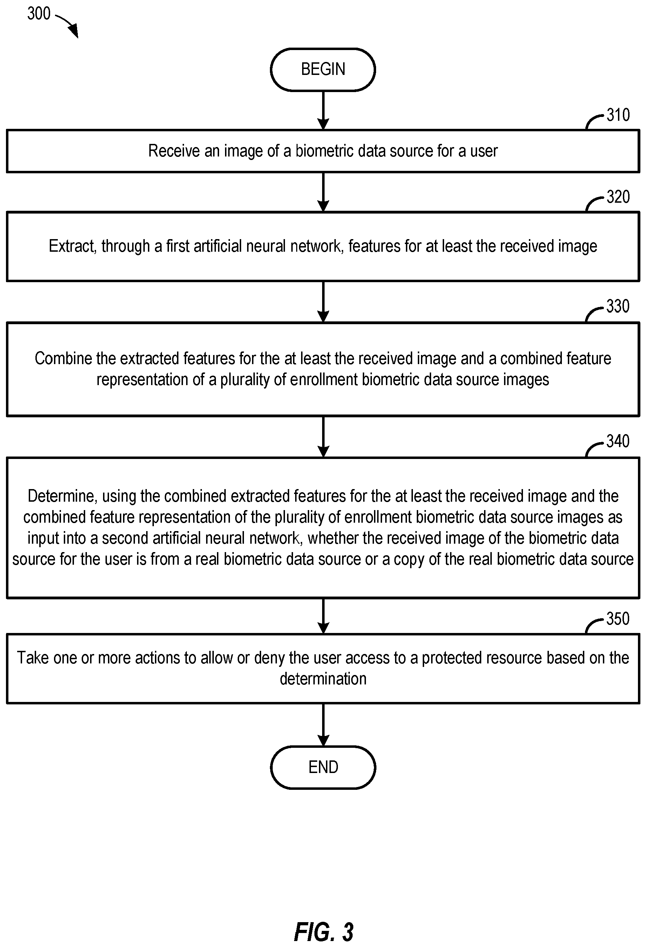

**FIG. 3** illustrates example operations 300 that may be performed for biometric authentication, according to certain aspects of the present disclosure.

As illustrated, operations 300 begin at block 310, where a computing system receives an image of a biometric data source for a user. The received image may be an image generated by one of a variety of sensors, such as ultrasonic sensors, optical sensors, or other devices that can capture unique features of a biometric data source, such as a finger, an iris, a user's face, or the like, for use in authenticating a user of the computing system. In some aspects, the received image may be an image in a binary color space. For example, in a binary color space in which images of a fingerprint are captured, a first color represents ridges of a captured fingerprint and a second color represents valleys of the captured fingerprint. In some aspects, the received image may be an image in a low-bit-depth monochrome color space in which a first color represents ridges of a captured fingerprint, a second color represents valleys of the captured fingerprint, and colors between the first color and second color represent transitions between valleys and ridges of the captured fingerprint.

At block 320, the computing system extracts, through a first artificial neural network, features for at least the received image. The first artificial neural network may include, for example, convolutional neural networks (CNNs), transformer neural networks, recurrent neural networks (RNNs), or any of various other suitable artificial neural networks that can be used to extract features from an image or a representation thereof. Features may be extracted for the received image and for images in an enrollment image set using neural networks using different weights or using the same weights. In some aspects, features may be extracted for the images in the enrollment image set *a priori* (e.g., when a user enrolls a finger for use in fingerprint authentication, enrolls an iris for use in iris authentication, enrolls a face for use in facial recognition-based authentication, etc.). In other aspects, features may be extracted for the images in the enrollment image set based on a non-image representation of the received image (also referred to as a query image) when a user attempts to authenticate through a biometric authentication pipeline.

At block 330, the computing system combines the extracted features for the at least the received image and a combined feature representation of a plurality of enrollment biometric data source images. The combined feature representation of the plurality of enrollment biometric data source images may be generated, for example, by aggregating features extracted from individual images of the plurality of enrollment biometric data source images into the combined feature representation. As discussed in further detail herein, the features extracted for the received image and the combined feature representation of the plurality of enrollment biometric data source images may be combined using various feature infusion techniques that can generate a combined set of features, which then may be used to determine whether the received image of the biometric data source for the user is from a real biometric data source or a fake biometric data source that is a copy of the real biometric data source (e.g., a real fingerprint or a fake that is a copy of the real fingerprint).

At block 340, the computing system determines, using the combined extracted features for the at least the received image and the combined feature representation of the plurality of enrollment biometric data source images as input into a second artificial neural network, whether the received image of the biometric data source for the user is from a real biometric data source or a copy of the real biometric data source. As used herein, a copy of the real biometric data source may include a replica of the real biometric data source (e.g., a replica of a real fingerprint implemented on a fake finger), a synthesized input generated from minutiae captured from other sources, a synthetically generated and refined image of a biometric data source, or an image of a biometric data source (e.g., from a collection of images) designed to match many users of a fingerprint authentication system. A copy of the real biometric data source may also or alternatively include data from non-biometric sources. In some aspects, the system can determine whether the received image of the biometric data source for the user is from a real biometric data source or a copy of the real biometric data source using a multilayer perceptron (MLP) neural network or other neural networks that can use the features extracted from the received image and the combined feature representation of the plurality of enrollment biometric data source images to determine whether the received image is from a real biometric data source or a copy of the real biometric data source.

At block 350, the computing system takes one or more actions to allow or deny the user access to a protected resource based on the determination. In some aspects, where the determination is performed after determining that the received image of the biometric data source matches one or more of the enrollment images, the computing system can allow the user access to the protected computing resource if the determination is that the image of the biometric data source is from a real biometric data source and can deny the user access to the protected computing resource if the determination is that the image of the biometric data source is from a copy of the real biometric data source. Where the determination is performed prior to determining whether the received image of the biometric data source matches one or more of the enrollment images, the computing system can proceed to perform biometric matching against the enrollment images if the determination is that the image of the fingerprint is from a real fingerprint and can deny the user access to the protected computing resource if the determination is that the image of the biometric data source is from a copy of the real biometric data source without performing biometric matching against the enrollment images.

*Example Fingerprint Anti-Spoofing Protection Pipeline*

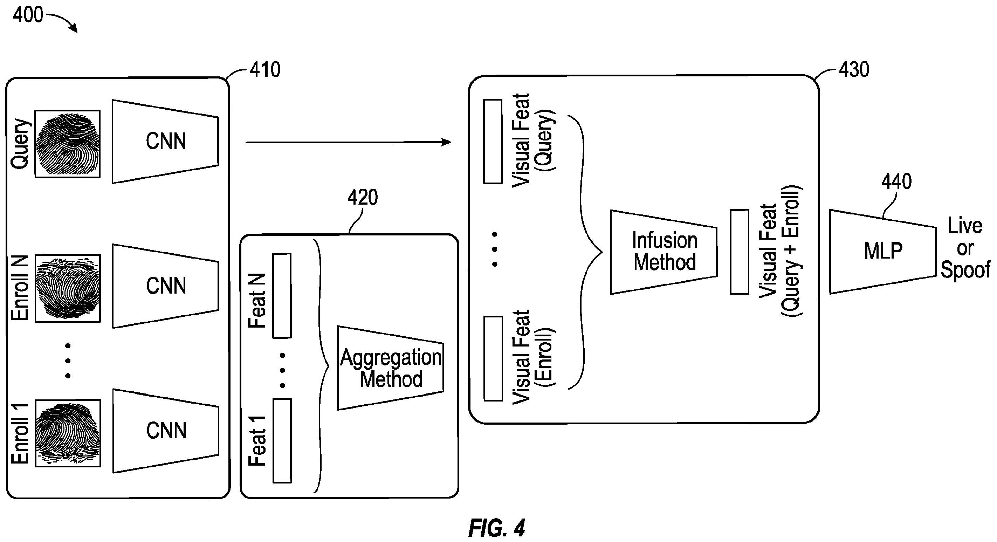

**FIG. 4** illustrates an anti-spoofing protection pipeline 400 that uses query and enrollment data to determine whether a query image is from a real biometric source, according to aspects of the present disclosure. In this example, anti-spoofing protection pipeline 400 may be used in a fingerprint authentication system to determine whether a query image is from a real fingerprint. It should be recognized, however, that anti-spoofing protection pipeline 400 may be applied to enrollment and query images for data obtained from any variety of biometric data sources, such as images of an iris, images of a user's face, graphical representations of a user's voice, or other image-based authentication in which images of a biometric data source for a user are used to authenticate the user. The fingerprint anti-spoofing protection pipeline 400 may include a feature extraction stage 410, a feature aggregation stage 420, and a feature infusion stage 430.

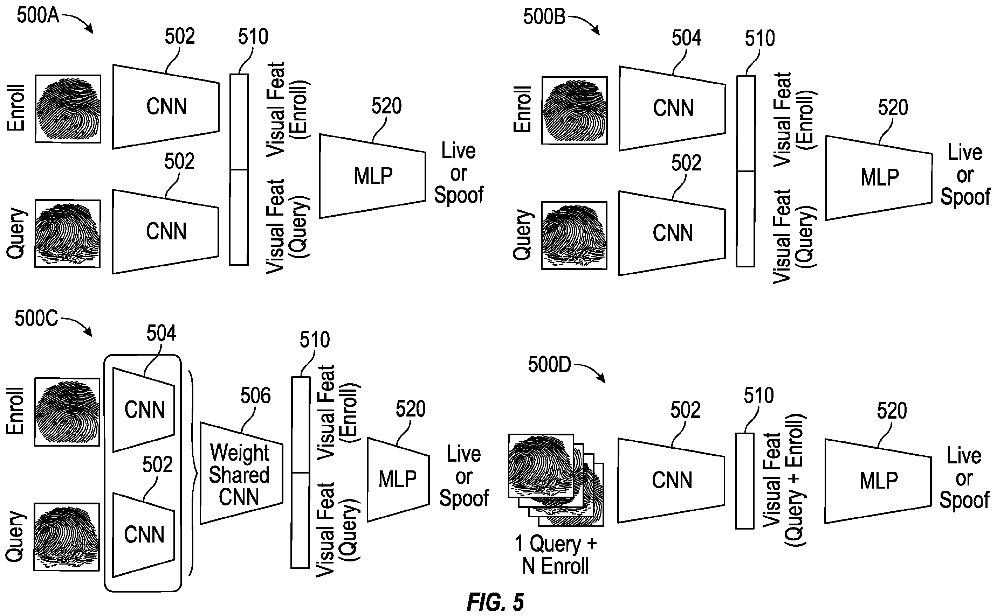

As illustrated, anti-spoofing protection pipeline 400 may begin with feature extraction stage 410. At feature extraction stage 410, convolutional neural networks may be used to extract features from the received query image of the user fingerprint and one or more previously generated enrollment images. As discussed, the enrollment images may be images that a user provided to a fingerprint authentication system when enrolling a finger for use in fingerprint authentication, and these images may be used to determine whether the received query image corresponds to an image of an enrolled fingerprint and to determine whether to grant access to computing resources protected by a fingerprint authentication system. In some aspects, feature extraction stage 410 may extract features from the received query image of the user fingerprint and may extract features associated with each of the plurality of enrollment images based on a representation of each of the plurality of enrollment images rather than the enrollment images themselves. Features may generally be extracted from the received query image and the one or more previously generated enrollment images using convolutional neural networks. Generally, these features may be features that are learned by the convolutional neural networks as features that may be useful for a specific classification task (e.g., the fingerprint spoofing discussed herein). For example, the features extracted by a last layer of a convolutional neural network may represent concrete qualities of an input image or portions thereof, such as brightness, statistics related to blobs, dots, bifurcations, or the like in an image. The features extracted by the convolutional neural networks may also or alternatively include abstract, high-level combinations of features and shapes identified in the received query image and the enrollment images. The convolutional neural networks may share parameters, such as weights and biases, or may use different parameters. Various techniques may be used to extract features from fingerprint images or data derived from these fingerprint images, as discussed in further detail below with respect to **FIG. 5.**

In some aspects, a query image $I_q \in \mathbb{R}^{C \times H \times W}$ and $N$ enrollment images $I_e^i \in \mathbb{R}^{C \times H \times W}$, with $i \in \{1, 2, ..., N\}$ may be received at feature extraction stage 410. The query image $I_q$ may be processed through a feature extractor $\phi_q(\cdot)$ to encode the query image into a set of features $f_q = \phi_q(I_q)$, where $f_q \in \mathbb{R}^D$. Similarly, the $N$ enrollment images $I_e^i$ may be processed through a feature extractor $\phi_e(\cdot)$ to generate a set of features $f_e^i = \phi_e(I_e^i)$ , where $f_e^i \in \mathbb{R}^D$ , and $D$ represents a number of values that describe the features extracted from each image (also referred to as a dimensionality of the features extracted from the image).

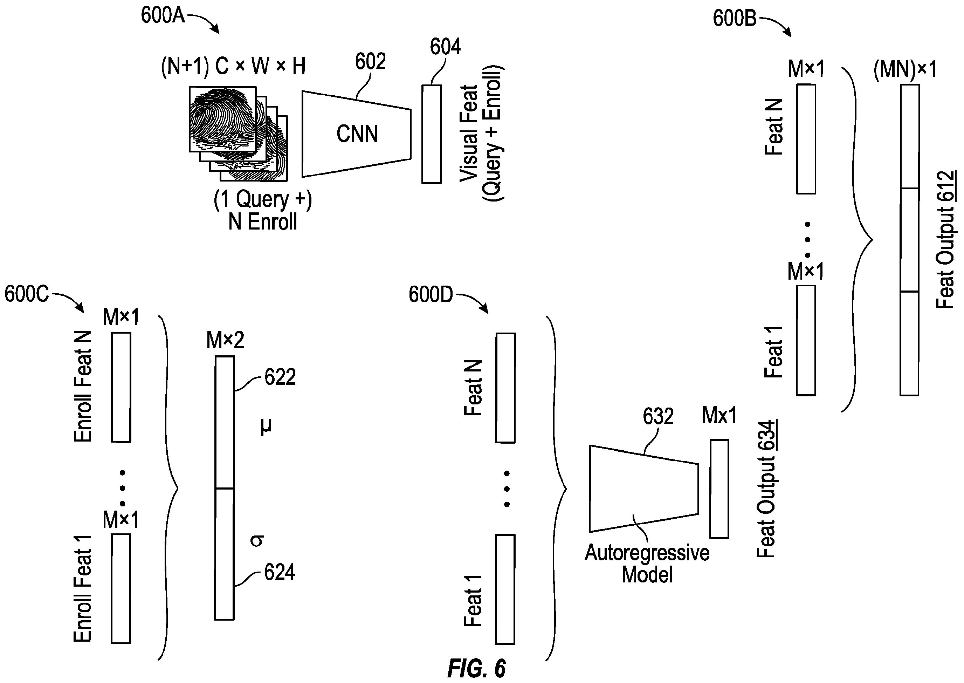

Feature aggregation stage 420 generally creates a combined feature representation of the plurality of enrollment fingerprint images from the features extracted at feature extraction stage 410 for the plurality of enrollment fingerprint images. The combined feature representation may be generated, for example, by concatenating features extracted from the plurality of enrollment fingerprint images into a single set of features. Various techniques may be used to generate the combined feature representation, as discussed in further detail below with respect to **FIG. 6.**

In some aspects, the feature aggregation stage 420 can combine the enrollment features $f_e^1, f_e^2, \dots, f_e^i$ , $i \in \{1, 2, ..., N\}$ into a single feature $f_e^{agg}$ using various techniques, as discussed in further detail below with respect to **FIGs. 5** through **7.** Generally, the aggregation of features into $f_e^{agg}$ may be performed based on vector concatenation, calculation of an arithmetic mean, or other techniques that can be used to aggregate features into a single aggregated feature. In vector concatenation, enrollment features may be concatenated along a given axis to obtain a one-dimensional vector having dimensions of $N * D$. When features are aggregated based on an arithmetic mean, an aggregated feature vector may be calculated according to the equation

$$f_e^{agg} = \frac{1}{N} \sum_{i=1}^{N} f_e^i.$$

In this case, the enrollment features extracted from images $I_e^i \in \mathbb{R}^{C \times H \times W}$ , with $i \in \{1, 2, ..., N\}$ may be compacted into D values.

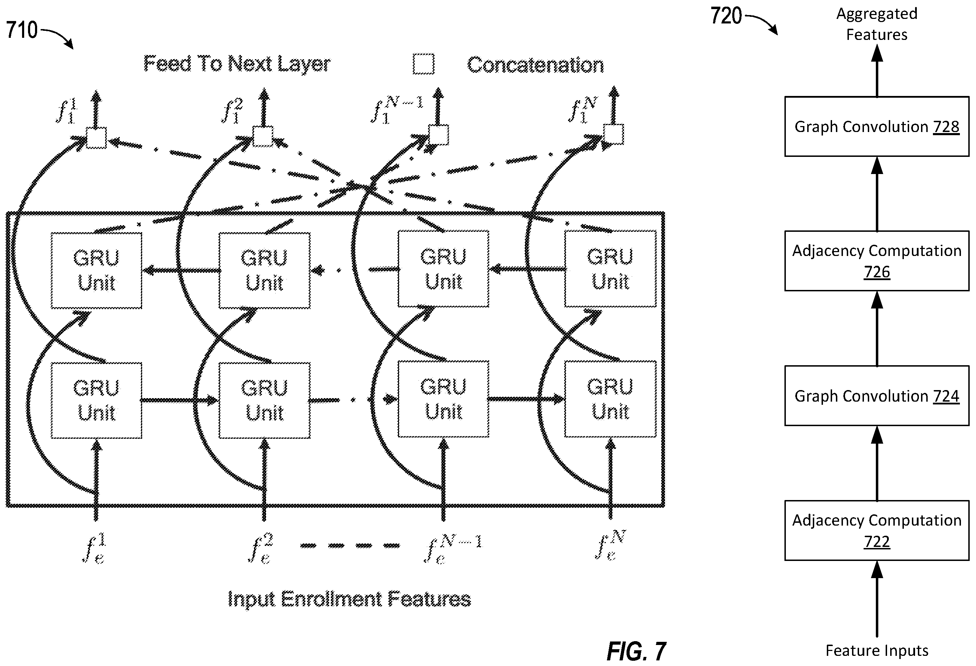

Feature infusion stage 430 generally combines the extracted features for the received image generated in feature extraction stage 410 and the combined feature representation of the plurality of enrollment images generated in feature aggregation stage 420 into data that can be used by MLP 440 to determine whether the received query image is from a real fingerprint or a copy of the real fingerprint. Feature infusion stage 430 may use one or more artificial neural networks to combine the extracted features for the received image and the combined feature representation of the plurality of enrollment fingerprint images into a combined set of visual features. Techniques used to combine the extracted features for the received image and the combined feature representation of the plurality of enrollment fingerprint images are discussed in further detail below with respect to FIGs. 7A through 7C.

*Example Feature Extraction from Received Fingerprint Images and Enrollment Fingerprint Images*

Generally, to extract features from the received fingerprint images and the enrollment fingerprint images, these images may be processed through one or more convolutional neural networks. The output of these convolutional neural networks may be low-dimensional visual features that describe the received fingerprint images. **FIG. 5** illustrates various techniques that may be implemented in feature extraction stage 410 for extracting features from the received fingerprint images and the enrollment fingerprint images. Again, wile **FIG. 5** illustrates these techniques in the context of fingerprint images, it should be recognized that the feature extraction techniques discussed herein may be applied to enrollment and query images for data obtained from any variety of biometric data sources.

Example 500A illustrates feature extraction using weight-shared convolutional neural networks. In this example, two CNNs 502 using the same parameters (e.g., weights, biases, etc.) may be used to extract features from the enrollment images and the query image. A combined feature representation 510 may be generated from the output of the CNNs 502. After the combined feature representation 510 is generated, an artificial neural network, such as MLP 520, can use the combined feature representation 510 to determine whether the received query fingerprint image is from a real fingerprint or a copy of the real fingerprint. The output of the artificial neural network (e.g., the determination of whether the received query fingerprint image is from a real fingerprint or a copy of the real fingerprint) may be used to take one or more actions to allow or block access to a protected computing resource. In this example, the features extracted from the received query image and the enrollment images may have the same or different dimensionality and may be obtained from the same neural network or a different neural network, and the visual features may be spatial features or non-spatial features. CNN 502 may, in some aspects, be implemented with multiple layers, with a last layer in the CNN 502 being a global spatial pooling operator. CNN 502 may be trained, in some aspects, as part of an end-to-end anti-spoofing protection model. In another aspect, CNN 502 may be pre-trained on query images as part of an anti-spoofing protection model. Weights may subsequently be modified to extracted features from the enrollment images captured locally on a computing device.

Example 500B illustrates feature extraction using weight-separated convolutional neural networks. In this example, a CNN 502 using a first set of parameters (e.g., weights, biases, etc.) may be used to extract features from a query image, and a second CNN 504 using a second set of parameters may be used to extract features from the plurality of enrollment images. In this example, CNNs 502 and 504 may use different weights and the same or different model architectures to extract visual features from query and enrollment images. Because the weights used in CNNs 502 and 504 are different, the CNNs may be trained to extract different information. For example, CNN 502 may be trained to extract images that are discriminative for an anti-spoofing task, and CNN 504 may be trained to extract information from the enrollment images that may be useful for representing the user and/or the sensor(s) used to capture the query and enrollment images. CNNs 502 and 504 may be trained jointly, for example, as part of an end-to-end anti-spoofing protection model.

Example 500C illustrates feature extraction using a weight-hybrid convolutional neural network. Example 500C may be considered a hybrid of examples 500A and 500B. In one example of feature extraction using a weight-hybrid CNN, weight-separated CNNs 502 and 504 may be used to extract a first set of features from the query image and the plurality of enrollment images, respectively, as discussed above with respect to example 500B. The first set of features extracted by CNNs 502 and 504 may, as discussed, be low-level features specific to the query image and enrollment image domains, respectively. This first set of features may be input into a weight-shared CNN 506, which may be trained to output high-level features for the query image and enrollment images in a shared feature space. That is, combined feature representation 510, generated by the weight-shared CNN 506, may include features in a common feature space generated from low-level features in different feature spaces for the enrollment and query images.

In another example of feature extraction using a weight-hybrid CNN, visual features extracted by the CNNs 502 and 504 may be combined into a stack of visual features. The stack of visual features may be input into weight-shared CNN 506 in order to generate the combined feature representation 510. In this example, the visual features extracted by CNNs 502 and 504 may have a same spatial shape to allow for these features to be stacked. By stacking the visual features extracted from the query images and enrollment images, convolutional layers in weight-shared CNN 506 may learn filters that compare inputs in spatial dimensions. However, inference may be less efficient, as enrollment image features may be precomputed only up to the input into the weight-shared CNN 506.

Example 500D illustrates feature extraction from a stack of images including the query image and a plurality of enrollment images. In this example, the query image and enrollment images may be stacked based on one or more dimensions and fed to a single CNN 502 for feature extraction. To stack the images, the images may be spatially aligned so that visual features (e.g., ridges and valleys captured in a fingerprint image) are aligned similarly in each image in the stack of images. A combined set of feature representation 510 (e.g., of visual features from the stack of images) may be extracted by the CNN 502, and the combined set of visual features may be fed into an artificial neural network, such as MLP 520, to determine whether the received query fingerprint image is from a real fingerprint or a copy of the real fingerprint. In this example, CNN 502 may be trained as part of an end-to-end anti-spoofing protection model and deployed to a computing device on which fingerprint authentication and anti-spoofing protection operations are performed.

In some aspects, the features extracted from the received fingerprint images and the enrollment fingerprint images may include one or more precomputed features. These precomputed features may include or be derived from other components in an anti-spoofing system (e.g., temperature, impedance, time, etc.). In some aspects, the pre-computed processes may be generated from the received images, such as a number of ridges or valleys in a fingerprint image, signal intensity, or the like. These precomputed features may be extracted similarly from the query and enrollment fingerprint images and may include visual features from the query and enrollment fingerprint images and features associated with metadata about the sensor or the environment in which the computing system operates. In some aspects, the precomputed features may be concatenated with the visual features extracted by the one or more CNNs 502, 504, and/or 506 to be the input of an artificial neural network used to determine whether the query fingerprint image is from a real fingerprint or a copy of the real fingerprint. In another aspect, the precomputed features may be infused into the one or more CNNs to condition extraction of visual features from the query and enrollment fingerprint images.

It should be understood that while Examples 500A-500D illustrate the use of CNNs to extract features from the query image and the plurality of enrollment images, any variety of artificial neural networks may be used to extract features from the query image and the plurality of enrollment images. For example, as discussed above, features may be extracted from the query image and the plurality of enrollment images using recurrent neural networks, transformer neural networks, or the like.

*Example Feature Aggregation from Enrollment Fingerprint Images*

As discussed above, features extracted from the received query image may be combined with a combined feature representation of the plurality of enrollment fingerprint images to generate a combined representation that can be processed by an artificial neural network to determine whether the received query image is from a real fingerprint or a copy of the real fingerprint. Because the enrollment fingerprint images generally include multiple images for each enrolled finger, features can be extracted from the images for each finger and aggregated into a single enrollment feature representation. Various techniques may be used in feature aggregation stage 420 to combine the features extracted from each enrollment fingerprint image, including non-parametric techniques in which features are concatenated or computed, as well as parametric techniques that learn an optimal technique to combine the features extracted from each enrollment fingerprint image. **FIG. 6** illustrates various techniques for generating the combined feature representation of the plurality of enrollment fingerprint images.

Example 600A illustrates an example of generating the combined feature representation of the plurality of enrollment fingerprint images based on image stacking techniques. In example 600A, the query image and enrollment fingerprint images may be represented in a three-dimensional space of a channel, width, and height. The query image and one or more enrollment fingerprint images may be stacked on the channel dimensions and fed as input into a convolutional neural network 602 to extract visual features 604 from the query fingerprint image and the enrollment fingerprint images. Generally, CNN 602 may be configured to combine information from the query fingerprint image and enrollment fingerprint images in the stack into a single visual representation. Because CNN 602 may process a same spatial region over multiple channels, generating a combined feature representation based on image stacking may be effective when the query and enrollment images share a same coordinate system (e.g., have the same height, width, and channel dimensions).

Example 600B illustrates an example of feature stacking, or concatenation, into a concatenated feature output 612. As illustrated, each enrollment image 1 through $N$ may be associated with features 1 through $N$ extracted (e.g., *a priori,* during fingerprint enrollment, etc.) using a CNN, as discussed above. In some aspects, where an image is missing from an enrollment fingerprint image set, a zero vector may be used in its place. As illustrated, each feature associated with an enrollment image may have dimensions M x 1, and the concatenated feature output 612 for an enrollment fingerprint image set of $N$ images may have dimensions $M * N$ x 1. In some aspects, though not illustrated, features extracted from the received query image may also be concatenated with concatenated feature output 612 to generate the combination of the features extracted from the received query image and the combined feature representation of the plurality of enrollment fingerprint images.

In some aspects, the combined feature representation of the plurality of enrollment fingerprint images may be compressed into a compact representation in which the features are aggregated. Example 600C illustrates an example of generating this compact representation based on mean and standard deviation information. In this example, as in example 600B, features extracted from each enrollment fingerprint image may have dimensions $M$ x 1. A computing system can calculate the mean across the features extracted from the $N$ enrollment fingerprint images, and additional information, such as standard deviation, higher order moments, or other statistical information may also be calculated from the values of the features extracted from the $N$ enrollment fingerprint images. In this example, a vector having size $M$ x 2 may be generated as a concatenation of a mean feature vector 622 and a standard deviation feature vector 624. Because the combined feature representation may be represented as a vector of size $M$ x 2, the memory needed to store the combined feature representation may be reduced from being based on a linear relationship with the number of enrollment fingerprint images to a constant, which may reduce the number of parameters input in a layer of a neural network that processes the aggregated features. Further, because statistical measures such as mean and standard deviation may be invariant to a number of data points, enrollment finger aggregation based on these statistical measures may be more robust to missing enrollment images in a data set.

Examples 600A through 600C illustrate non-parametric techniques for aggregating enrollment fingerprint image features and infusing these enrollment fingerprint image features with features extracted from a received query fingerprint image. The use of non-parametric features may constrain the expressiveness of a model and its ability to process and combine features. To allow for increased abilities to process and combine features, various autoregressive models may be used to generate the combined feature representation of the plurality of enrollment fingerprint images, as illustrated in example 600D. In example 600D, the features extracted from the enrollment fingerprint images may be processed through an autoregressive model 632 to generate a combined feature output 634 having dimensions $M$ x 1.

In example 600D, the autoregressive model 632 may include, for example, recurrent neural networks (RNNs), gated recurrent units (GRUs), long-short term memory (LSTM) models, transformer models, or the like. RNNs may be relatively simple, compact, and resource efficient; however, variations of autoregressive models such as GRUs or LSTM models may increase the expressiveness of the model (at the expense of additional multiply-and-accumulate (MAC) operations and a number of parameters). Transformer models may allow for relationships to be captured between elements that are distant from each other in the sequence of enrollment fingerprint images and may also allow for invariance with respect to the order in which enrollment fingerprint images are presented to the transformer models. Generally, these autoregressive models may allow a sequence of images having an arbitrary length to be processed into an $M$ x 1 feature output 634 so that fingerprints may be enrolled using any arbitrary number of enrollment images. Further, autoregressive models may allow the enrollment fingerprint images to be processed sequentially, such as in the order in which the enrollment fingerprint images were captured during fingerprint enrollment. These autoregressive models may, for example, allow for patterns to be learned from the sequence of images, such as increasing humidity and/or temperature at the sensor used to generate the enrollment fingerprint images, which may in turn be used to account for environmental factors that may exist when a sensor captures a fingerprint of a user.

For example, if a GRU 710, as illustrated in **FIG. 7** is used to generate the aggregated features for the enrollment image set, the inputs and outputs of the GRU may be defined according to the equation:

$$h_l^i = GRU(f_l^i, h_l^{i-1}),$$

where $f_l^i$ represents that $i^{th}$ latent feature at layer $l$, $h_l^{i-1}$ represents a previous activation for layer $l$, and $h_l^i$ represents the current activation for layer $l$. In this example, the input to the first layer may be the enrollment features $f_0^i = f_e^i$. The last activation of the final GRU layer may be selected as the aggregated feature for the enrollment set, such that $f_e^{agg} = f_L^N$.

In some aspects, key-query-value attention mechanisms between query and enrollment features may be used to generate the aggregated features for the enrollment data set and the query image. By using attention mechanisms to generate the aggregated features, the model may learn the importance of each image in the enrollment data set relative to a specific query image, as discussed in further detail below with respect to **FIG. 8B.**

In some aspects, the features of the enrollment images may be aggregated using graph neural networks (GNNs), such as GNN 720 illustrated in **FIG. 7,** which can model complex relationships between enrollment and query features. In such a case, the enrolment and query features may be represented as nodes in a graph. A GNN may operate on a layer-by-layer basis to process the graph. For example, as illustrated, GNN 720 includes an adjacency computation block 722 and a graph computation block 724 for a first layer of GNN 720 and an adjacency computation block 726 and graph computation block 728 for a second layer of GNN 720, in which the second layer takes, as input, the graph computed by the graph computation block 724 of the first layer in GNN 720. While GNN 720 illustrates two layers including an adjacency computation block and a graph computation block, it should be recognized that GNN 720 may include any number of layers.

At any given layer, multiple adjacency matrices may be computed based on the features in a given node, and the adjacency matrices may be applied in various graph convolution operations.

An adjacency matrix A may include a plurality of elements obtained using a distance function $\psi_i(\cdot)$ between node features $f_l^i$ and $f_l^j$, such that $A_l^{ij} = \psi_i(f_l^i, f_l^j)$. In some aspects, a neural network can parameterize the distance function $\psi_i(\cdot)$ such that a scalar value is output from vectors representing node features $f_l^i$ and $f_l^j$. After generating the adjacency matrices A, a graph convolution operation may be performed according to the equation:

$$f_{l+1}^i = GConv(f_l^i) = \rho\left(\sum_{A_l \in \mathcal{A}_l} A_l f_l^i W_l\right).$$

In this equation, $A_l \in \mathbb{R}^{(N+1) \times (N+1)}$ represents a learned adjacency matrix generated from the set of adj acency matrices $\mathcal{A}_l$, and $f_l^i \in \mathbb{R}^{(N+1) \times d_l}$ represents the feature matrix of the $l^{th}$ layer in the GNN. The feature matrix may include $N$ enrollment features and one query feature of dimension $d_l$. $W_l \in \mathbb{R}^{d_l \times d_{l+1}}$ may be the mapping matrix associated with layer $l$ that maps from a feature space with dimensions $d_l$ to a feature space with dimensions $d_{l+1}$. Finally, $\rho$ represents a nonlinear function.

In this example, the inputs to the first layer of the GNN may include $N + 1$ nodes including $N$ enrollment features and the query feature. The output features for the query mode may be used as a prediction of whether the query image is an image of a real biometric source for a user being authenticated or a copy of the real biometric source.

*Example Query Image Feature and Enrollment Image Feature Infusion*

After features (or some other representation) are extracted from the enrollment and query images, the features can be combined using neural networks. As discussed, the combined features may then be processed through an artificial neural network, such as an MLP, which can generate an output indicating whether the received query image is an image of a real fingerprint or a copy of the real fingerprint. Various techniques may be used to combine the query and enrollment fingerprint image features in feature infusion stage 430, including non-parametric techniques and parametric techniques. Generally, non-parametric techniques for combining features from the query and enrollment fingerprint images may include the use of distance metrics to compare query and enrollment images. Parametric techniques may, for example, use self-attention and/or gating mechanisms to learn techniques by which features extracted from the query and enrollment fingerprint images may be combined. **FIGs. 8A-8C** illustrate examples of these various techniques

**FIG. 8A** illustrates an example 800A in which features extracted from the query and enrollment fingerprint images are combined based on a likelihood of the received query image being from a real fingerprint, given a mean and standard deviation calculated based on features extracted from the enrollment fingerprint images. As illustrated, given an $M$ x 1 feature vector 802 (designated as x) of features extracted from the received query image, and an $M$ x 2 feature vector including a mean feature vector 804 (designated as $\mu$) and a standard deviation feature vector (designated as $\sigma$), a combined vector 808 with dimensions $M$ x 1, with each value in the combined vector 808 being calculated as a log likelihood of a probability that x is from a real fingerprint, conditioned on $\mu$ and $\sigma$ (i.e., as $\log p(x|\mu, \sigma)$ ). Mean feature vector 804 and standard deviation vector 806 may be interpreted as a representation of expected features of a live datapoint (e.g., an image captured of a real fingerprint as opposed to a copy of the real fingerprint). In some aspects, it may be assumed that $M$ Gaussian distributions can be used to model the $M$-dimensional features, and thus, the log-likelihood of each dimension of the query features may be calculated according to the following equation:

$$\log p(x|\mu,\sigma) = -\log \sigma - \log \sqrt{2\pi} - \frac{(x-\mu)^2}{2\sigma^2}$$

This results in combined vector 808 being an $M$-dimensional representation that combines the enrollment and query features. Combined vector 808 may subsequently be processed through an artificial neural network, such as an MLP, to determine whether x corresponds to an image captured from a real fingerprint or a copy of the real fingerprint.

In another example using combination based on a likelihood of the received query image being from a real fingerprint, given a mean and standard deviation calculated based on features extracted from the enrollment fingerprint images, it may be assumed that a single $M$-dimensional Gaussian distribution with independent dimensions can model the feature representation. In this case, the dimensions may be represented in a diagonal covariance matrix. The log-likelihood of the query under the enrollment image mean $\mu$ and the enrollment image standard deviation $\sigma$ may be output as a scalar value, which may then be used (directly) to determine whether x corresponds to an image captured from a real fingerprint or a copy of the real fingerprint.

Among parametric models, attention-based models may be useful to combine enrollment fingerprint image features conditioned on the query fingerprint image features. **FIG. 8B** illustrates an example 800B in which features extracted from the query and enrollment fingerprint images are combined using attention-based models (e.g., using self-attention). In this example, a self-attention layer may include a plurality of MLPs. MLP_Q 812 may embed the features extracted from the query fingerprint image into a query vector 822. MLP_K 814 may embed enrollment features in a key vector 824, with a same dimensionality as the query vector 822. MLP_V 816 may embed each enrollment fingerprint image feature into a value vector 826.

The information in key vector 824 may be used to compute an importance of each visual feature in the value vector 826 with respect to features in the query vector 822. To compute this importance through importance calculation layer 832, an inner product may be calculated between the query vector 822 and the key vector 824, and then scale and softmax layers may transform the importance scores to probability values. The probability value may be represented according to the equation:

$$Attention(Q,K,V) = softmax\left(\frac{QK^T}{\sqrt{d_K}}\right)V$$

More specifically, an attention query may be defined according to the equation:

$$Q = A_Q(f_q),$$

and the attention keys and values may be generated from the enrollment images according to the equations:

$$K_i = A_K(f_e^i)$$

and

$$V_i = A_V\big(f_e^i\big),$$

respectively, where $A_Q$, $A_K$, and $A_V$ are linear layers that map from a D-dimensional feature space to an $M$-dimensional feature space. In this case, the attention weights obtained from $Q \in \mathbb{R}^{1 \times M}$ and $K \in \mathbb{R}^{N \times M}$ may be applied to value vectors $V \in \mathbb{R}^{N \times M}$ to obtain an aggregated feature $f_e^{agg}$. The aggregated feature may be represented by the equation:

$$f_e^{agg} = Softmax\left(\frac{QK^T}{\sqrt{M}}\right)V,$$

where $Q$ represents corresponds to a query image, $K^T$ corresponds to a key image from the set of enrollment images, and $V$ corresponds to a value associated with the pairing of $Q$ and $K^T$

The probability values output from importance calculation layer 832 may be linearly combined at combining layer 834 with the values vector 826. This generally results in a linear combination of the values vector 826, which includes an aggregated representation of the enrollment fingerprint image features, conditioned on the query features. A skip connection may be used to include the query features in the input of a next layer of a CNN or an MLP classifier 836.

In another example 800C, illustrated in **FIG. 8C,** features extracted from the query and enrollment fingerprint images may be combined using squeeze-excite gating. Like the self-attention mechanisms illustrated in 800B, squeeze-excite gating may be used to aggregate and infuse (combine) the enrollment information given the query features. In this example, squeeze-excite gating may be used to gate query features, conditioned on the enrollment features.

A convolutional neural network 840, taking a query image as input, may include a plurality of squeeze-excite modules. Within a squeeze-excite module, a stack 842 of intermediate query visual features having width, height, and channel dimensions W x H x C may be squeezed into a C x 1 representation 844, which may be combined with enrollment fingerprint image features and processed through an MLP 846 go generate a size C x 1 representation 848. A product of stack 842 and C x 1 representation 848 may calculated to generate a stack of features 850, which may also have width, height, and channel dimensions W x H x C. The gating may be performed on the channel dimension of the visual features and may be performed at any layer in CNN 840 that is parsing the query image.

*Example Geometric Transformation of Query Fingerprint Images*

In some aspects, an anti-spoofing protection model may have access to outputs of a fingerprint matching system, which may be used to condition an anti-spoofing protection model to use the most informative enrollment image(s) for a given finger. For example, the anti-spoofing protection model may receive, from a fingerprint matching system, information identifying the enrollment fingerprint image that matches the query fingerprint image. Additionally, the anti-spoofing protection image can receive, from the fingerprint matching system, information about the transformation applied to the query or enrollment image to find the matching enrollment image. Generally, the information about the transformation may be represented as a matrix such that the transformed image is calculated as the product of a transformation matrix and the original image. That is, for any given transformation, the transformed image may be represented by the equation:

$$\begin{bmatrix} x' \\ y' \\ 1 \end{bmatrix} = \begin{bmatrix} \cos a & -\sin a & h \\ \sin a & \cos a & k \\ 0 & 0 & 1 \end{bmatrix} \cdot \begin{bmatrix} x \\ y \\ 1 \end{bmatrix}$$

**FIG.** 9 illustrates an example of alignment preprocessing that may be performed on a query image or one or more enrollment images prior to determining whether the query image is from a real fingerprint, according to aspects of the present disclosure. As illustrated, for a given query image 902 and a matching enrollment image 904, a transformation may be applied to the matching enrollment image 904 to generate a combined image 906. The combined image 906 may include a transformation of the enrollment image to the coordinate system of the query image, and the combined image 906 may be padded to generate input image 908. Input image 908, including the padded combination of the query image 902 and matching enrollment image 904, may be input into an anti-spoofing protection model in which a CNN 910 extracts visual features 912 from the combination of the query image 902 and matching enrollment image 904, and the visual features 912 are processed through a neural network, such as MLP 914, to determine whether the query image 902 is from a real fingerprint or a copy of the real fingerprint. By spatially aligning the query and enrollment images, the output of the matcher algorithm may improve the performance of a personalized anti-spoofing protection model used to determine whether the query image 902 is from a real fingerprint or a copy of the real fingerprint based on features of the enrollment fingerprint images.

Various techniques may be used to leverage spatial alignment information in an anti-spoofing protection model. In one example, the query image and aligned enrollment image may be stacked in the channel dimension, and the CNN can learn filters that compare features across the spatially aligned inputs. In another example, difference techniques that subtract the enrollment image from the query image may be used to highlight features that change between the enrollment image and the query image in overlapping areas. In still another example, overlay techniques may allow a CNN to observe how shapes combine (e.g., at the edges of images). Intersection techniques in which only the intersection of the query and enrollment images are present to a CNN may constrain the CNN to examine features that can be compared and may exclude content for which the CNN has no reference. Finally, image stitching techniques may be used where geometric transformation coefficients are available for a plurality of enrollment fingerprint images. In such a case, each image in the plurality of enrollment fingerprint images may be transported to the same spatial coordinates and stitched together, which may allow a larger area of the enrolled finger to be recovered and increase the coverage of the enrollment fingerprint information with respect to a single captured query fingerprint image.

Similar techniques may be used to spatially align three-dimensional images, such as facial scans used in facial recognition systems. In such a case, query and enrollment images may be spatially aligned through three-dimensional transformations. For example, to align a query image and an enrollment image the enrollment images may be transformed using three-dimensional rotations and shifts such that the query image and aligned enrollment images can be stacked in one or more channel dimensions.

*Example Architecture of a System for Biometric Authentication Using Machine Learning-Based Anti-Spoofing Protection*

Generally, the performance of the anti-spoofing protection models described herein may be based on the domain, task, data set, and hardware under consideration. In one example, to optimize or at least enhance performance, the anti-spoofing protection model architecture described herein may be based on CNN and MLP components. As an example, the CNN may have eleven two-dimensional convolutional layers, alternated with two-dimensional batch normalization layers and rectified linear unit (ReLU) activation functions. To allow for personalization, the same architecture may be maintained for the CNNs used to extract features from the received query fingerprint image and the plurality of enrollment fingerprint images. Where hybrid weights are used (e.g., as discussed with respect to example 500C in **FIG. 5),** the CNN may be divided between the separated and shared portions after a convolutional layer that is approximately in the middle of the CNN. The CNN kernels may have a receptive field with 3 x 3 dimensions and may alternate between strides to downsample original images. The input of the network may, for example, have three dimensions (namely, width, height, and channel dimensions) of (180, 80, 2). The output visual features may have a shape, in the width, height, and channel dimensions of (3, 2, 32), which allows the CNN to capture different features on the channel dimension and retain some spatial information within the 3 x 2 spatial coordinates.

The MLP may have four linear layers alternating between batch normalization and ReLU activation functions, and may omit a dropout function. An input array, including approximately 200 features, may be gradually compressed through the MLP until the compression results in a two-dimensional output. The output generally includes the scores for an input being a live sample (e.g., from a real biometric data source) and the input being a spoof sample (e.g., from a copy of the real biometric data source). A softmax function may map these values into probabilities. The MLP may be trained using supervised learning techniques, for example, leveraging cross-entropy loss.

In contrast to non-personalized anti-spoofing protection models, aspects of the present disclosure leverage enrollment data to determine whether a query image is from a real biometric data source or a copy of the real biometric data source. The anti-spoofing protection models described herein can extract sensor-specific information from enrollment data by taking the enrollment data as a reference and can extract subject-specific information from the enrollment data. While access to the enrollment data is needed, aspects of the present disclosure may pre-process the enrollment data into extracted features during sensor calibration and enrollment, which may allow the anti-spoofing protection models herein to access an abstract representation of the enrollment fingerprint images. Further, the features extracted from the enrollment images may be precomputed, which may reduce memory and compute costs for fingerprint authentication and anti-spoofing protection.

Generally, at training time, query images and enrollment images may be processed through the neural network(s). Training may be optimized based on the hardware on which the models are trained, for example, by constraining the size of the neural network, or by loading partial data sets into memory and a processor used to train the neural network(s). At inference, because the parameters of the neural network(s) may remain static, features from the enrollment images may be at least partially pre-computed and stored up to the point at which the features are combined with the query features, which may reduce compute time and memory used to perform an inference with respect to whether the query images are from a real biometric data source or a copy of the real biometric data source. Finally, the behavior of the anti-spoofing protection models described herein may be finger and user agnostic, as the anti-spoofing protection models may be configured to focus on the relevant enrollment image set for the biometric data source and the user being authenticated.

Generally, the personalized anti-spoofing protection model described herein may provide for improved accuracy of anti-spoofing protection compared to non-personalized anti-spoofing protection models. Spoofing attacks generally fail at a higher rate when processed through the personalized anti-spoofing protection models described herein than when processed through non-personalized anti-spoofing protection models. Because spoofing attacks generally fail at a higher rate using the personalized anti-spoofing protection models, aspects of which are described herein, computing systems may be made more secure against attempts to gain unauthorized access to protected computing resources using fake biometric data sources and/or images derived therefrom.

*Example Processing System for Biometric Authentication Using Machine Learning-Based Anti-Spoofing Protection*

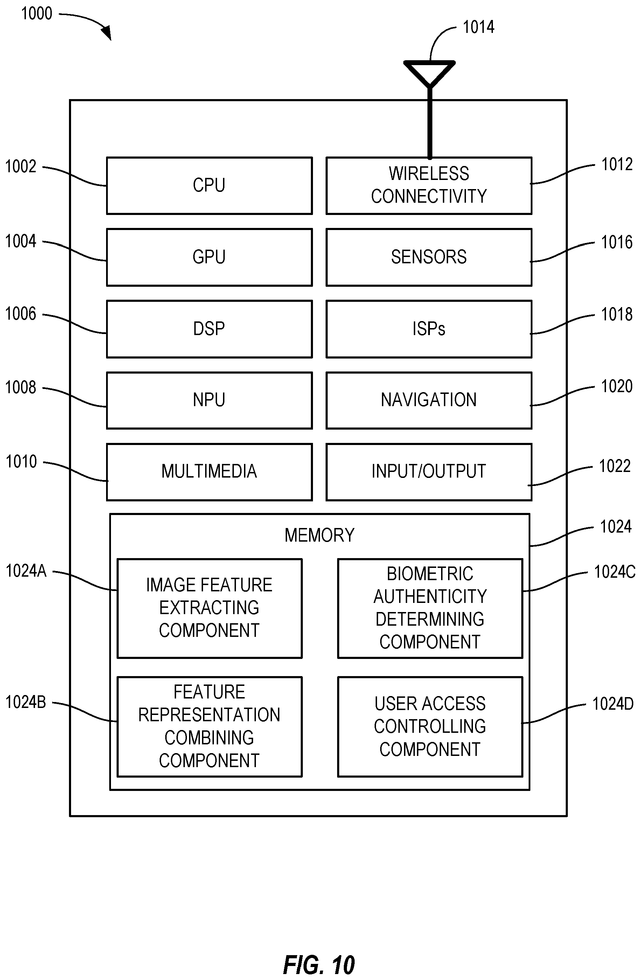

**FIG. 10** depicts an example processing system 1000 for biometric authentication using machine learning-based anti-spoofing protection, such as described herein for example with respect to **FIG. 3.**

Processing system 1000 includes a central processing unit (CPU) 1002, which in some examples may be a multi-core CPU. Instructions executed at the CPU 1002 may be loaded, for example, from a program memory associated with the CPU 1002 or may be loaded from a partition in memory 1024.

Processing system 1000 also includes additional processing components tailored to specific functions, such as a graphics processing unit (GPU) 1004, a digital signal processor (DSP) 1006, a neural processing unit (NPU) 1008, a multimedia processing unit 1010, a multimedia processing unit 1010, and a wireless connectivity component 1012.

An NPU, such as 1008, is generally a specialized circuit configured for implementing all the necessary control and arithmetic logic for executing machine learning algorithms, such as algorithms for processing artificial neural networks (ANNs), deep neural networks (DNNs), random forests (RFs), and the like. An NPU may sometimes alternatively be referred to as a neural signal processor (NSP), tensor processing units (TPU), neural network processor (NNP), intelligence processing unit (IPU), vision processing unit (VPU), or graph processing unit.

NPUs, such as 1008, are configured to accelerate the performance of common machine learning tasks, such as image classification, machine translation, object detection, and various other predictive models. In some examples, a plurality of NPUs may be instantiated on a single chip, such as a system on a chip (SoC), while in other examples they may be part of a dedicated neural-network accelerator.

NPUs may be optimized for training or inference, or in some cases configured to balance performance between both. For NPUs that are capable of performing both training and inference, the two tasks may still generally be performed independently.

NPUs designed to accelerate training are generally configured to accelerate the optimization of new models, which is a highly compute-intensive operation that involves inputting an existing dataset (often labeled or tagged), iterating over the dataset, and then adjusting model parameters, such as weights and biases, in order to improve model performance. Generally, optimizing based on a wrong prediction involves propagating back through the layers of the model and determining gradients to reduce the prediction error.

NPUs designed to accelerate inference are generally configured to operate on complete models. Such NPUs may thus be configured to input a new piece of data and rapidly process it through an already trained model to generate a model output (e.g., an inference).

In one implementation, NPU 1008 is a part of one or more of CPU 1002, GPU 1004, and/or DSP 1006.

In some examples, wireless connectivity component 1012 may include subcomponents, for example, for third generation (3G) connectivity, fourth generation (4G) connectivity (e.g., 4G LTE), fifth generation connectivity (e.g., 5G or NR), Wi-Fi connectivity, Bluetooth connectivity, and other wireless data transmission standards. Wireless connectivity component 1012 is further connected to one or more antennas 1014.

Processing system 1000 may also include one or more sensor processing units 1016 associated with any manner of sensor, one or more image signal processors (ISPs) 1018 associated with any manner of image sensor, and/or a navigation processor 1020, which may include satellite-based positioning system components (e.g., GPS or GLONASS) as well as inertial positioning system components.

Processing system 1000 may also include one or more input and/or output devices 1022, such as screens, touch-sensitive surfaces (including touch-sensitive displays), physical buttons, speakers, microphones, and the like.

In some examples, one or more of the processors of processing system 1000 may be based on an ARM or RISC-V instruction set.

Processing system 1000 also includes memory 1024, which is representative of one or more static and/or dynamic memories, such as a dynamic random access memory, a flash-based static memory, and the like. In this example, memory 1024 includes computer-executable components, which may be executed by one or more of the aforementioned processors of processing system 1000.

In particular, in this example, memory 1024 includes image feature extracting component 1024A, feature representation combining component 1024B, biometric authenticity determining component 1024C, and user access controlling component 1024D. The depicted components, and others not depicted, may be configured to perform various aspects of the methods described herein.

Generally, processing system 1000 and/or components thereof may be configured to perform the methods described herein.

Notably, in other embodiments, aspects of processing system 1000 may be omitted, such as where processing system 1000 is a server computer or the like. For example, multimedia processing unit 1010, wireless connectivity component 1012, sensor processing units 1016, ISPs 1018, and/or navigation processor 1020 may be omitted in other embodiments. Further, aspects of processing system 1000 may be distributed, such as training a model and using the model to generate inferences, such as user verification predictions.

*Additional Considerations*

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing, and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more.

**Claims**

**1.** A method of biometric authentication, comprising:

receiving (310) an image of a biometric data source for a user;

extracting (320), through a first artificial neural network (410), features for at least the received image;

combining (330) the extracted features for the at least the received image and a combined feature representation (420) of a plurality of enrollment biometric data source images of the same biometric modality, the combining using feature infusion techniques (430);

determining (340), using the combined extracted features for the at least the received image and the combined feature representation of the plurality of enrollment biometric data source images as input into a second artificial neural network (440), whether the received image of the biometric data source for the user is from a real biometric data source or a copy of the real biometric data source; and

taking (350) one or more actions to allow or deny the user access to a protected resource based on the determination.

2. The method of Claim 1, further comprising aggregating features extracted by a neural network from information derived from a plurality of enrollment biometric data source images into the combined feature representation of the plurality of enrollment biometric data source images.

3. The method of Claim 2, wherein the features extracted from the information derived from the plurality of enrollment biometric data source images are extracted during user biometric authentication enrollment; or

wherein the features extracted from the information derived from the plurality of enrollment biometric data source images comprise features extracted from a representation derived from each of the plurality of enrollment biometric data source images.

4. The method of Claim 2, wherein aggregating features extracted from the information derived from the plurality of enrollment biometric data source images into the combined feature representation comprises:

concatenating features extracted from each of the plurality of enrollment biometric data source images into a single set of features; or

generating a feature output based on an autoregressive model and features extracted from each of the plurality of enrollment biometric data source images; or

generating, from the features extracted from the plurality of enrollment biometric data source images, an average and a standard deviation associated with the features extracted from the plurality of enrollment biometric data source images.

5. The method of Claim 2, wherein:

the first artificial neural network and the second artificial neural network comprise convolutional neural networks, and

the first artificial neural network shares at least a subset of weights associated with the second artificial neural network.

6. The method of Claim 2, further comprising extracting additional features from the received image and the plurality of enrollment biometric data source images using a weight-shared convolutional neural network, the extracted features for the received image, and the features extracted from the plurality of enrollment biometric data source images.

7. The method of Claim 1, wherein extracting features for the at least the received image comprises:

combining the received image and the plurality of enrollment biometric data source images into a stack of images; and

extracting the features for the received image and features for each of the plurality of enrollment biometric data source images by processing the stack of images through the first artificial neural network.

8. The method of Claim 7, wherein combining the received image and the plurality of enrollment biometric data source images into the stack of images comprises:

identifying, relative to at least one image of the plurality of enrollment biometric data source images, a transformation to apply to the received image such that the received image is aligned with at least a portion of the at least one image of the plurality of enrollment biometric data source images;

modifying the received image based on the identified transformation; and

generating a stack including the modified received image and the at least the one image of the plurality of enrollment biometric data source images,

wherein generating the stack including the modified received image and the plurality of enrollment biometric data source images comprises one or more of:

stacking the modified received image and the at least the one image of the plurality of enrollment biometric data source images on a channel dimension,

subtracting the modified received image from the at least the one image of the plurality of enrollment biometric data source images,

overlaying the received image on the at least the one image of the plurality of enrollment biometric data source images,

outputting an intersection of the modified received image and the at least the one image of the plurality of enrollment biometric data source images, or

transforming the modified received image based on a stitched version of the plurality of enrollment biometric data source images.

9. The method of Claim 7, wherein combining the received image and the plurality of enrollment biometric data source images into the stack of images comprises:

identifying, relative to the received image, a transformation to apply at least one image of the plurality of enrollment biometric data source images such that the received image is aligned with at least a portion of the at least one image of the plurality of enrollment biometric data source images;

modifying the at least the one image of the plurality of enrollment biometric data source images based on the identified transformation; and

generating a stack including the received image and the modified at least the one image of the plurality of enrollment biometric data source images,

wherein generating the stack including the received image and the modified at least the one image of the plurality of enrollment biometric data source images comprises:

stacking the received image and the modified at least the one image of the plurality of enrollment biometric data source images on a channel dimension,

subtracting the received image from the modified at least the one image of the plurality of enrollment biometric data source images,

overlaying the received image on the modified at least the one image of the plurality of enrollment biometric data source images, or

outputting an intersection of the received image and the modified at least the one image of the plurality of enrollment biometric data source images.

10. The method of Claim 1, wherein determining whether the received image of the biometric data source for the user is from a real biometric data source or a copy of the real biometric data source comprises calculating a distance metric comparing the received image and the plurality of enrollment biometric data source images, and/or

wherein determining whether the received image of the biometric data source for the user is from a real biometric data source or a copy of the real biometric data source comprises calculating a log likelihood of the received image being a real biometric data source, given a mean and a standard deviation associated with the features extracted from the plurality of enrollment biometric data source images, and/or

wherein determining whether the received image of the biometric data source for the user is from a real biometric data source or a copy of the real biometric data source comprises weighting the extracted features for the received image and the features extracted from the plurality of enrollment biometric data source images using a key-query-value attention layer with key-query-value attention mechanisms between query and enrollment features.

11. The method of Claim 1, wherein determining whether the received image of the biometric data source for the user is from a real biometric data source or a copy of the real biometric data source comprises:

embedding the extracted features for the received image into a query vector using a first multi-layer perceptron;

embedding the features extracted from the plurality of enrollment biometric data source images into a key vector using a second multi-layer perceptron;

embedding the features extracted from the plurality of enrollment biometric data source images into a value vector using a third multi-layer perceptron; and

generating a value corresponding to a likelihood that the received image is from a real biometric data source based on an inner product between the query vector and the key vector, conditioned on features embedded into the query vector.

12. The method of Claim 1, wherein determining whether the received image of the biometric data source for the user is from a real biometric data source or a copy of the real biometric data source comprises gating one or more of the extracted features for the received image based on features extracted from the plurality of enrollment biometric data source images; or

wherein:

determining whether the received image of the biometric data source for the user is from a real biometric data source or a copy of the real biometric data source comprises gating the extracted features for the received image in a squeeze-excite network based on the features extracted from the plurality of enrollment biometric data source images;

the extracted features are represented by a height dimension, a width dimension, and a channel dimension; and the gating is performed on the channel dimension.

13. The method of Claim 1, wherein the received image of the biometric data source for the user comprises an image of a fingerprint of the user, or

wherein the received image of the biometric data source for the user comprises an image of a face of the user.

14. A processing system (1000), comprising:

a memory (1024) comprising computer-executable instructions; and

a processor (1002, 1104, 1006, 1008) configured to execute the computer-executable instructions and cause the processing system to perform the method of any of claims 1-13.

15. A non-transitory computer-readable medium having instructions stored thereon which, when executed by a processor, causes the processor to perform the method of any of claims 1-13.

**Patentansprüche**

1. Ein Verfahren zur biometrischen Authentifizierung, das Folgendes aufweist:

Empfangen (310) eines Bildes aus einer Quelle biometrischer Daten für einen Nutzer;

Extrahieren (320), durch ein erstes künstliches neuronales Netzwerk (410), von Merkmalen für wenigstens das empfangene Bild;

Kombinieren (330) der extrahierten Merkmale für wenigstens das empfangene Bild und einer Darstellung (420) kombinierter Merkmale einer Vielzahl von Quellbildern biometrischer Aufnahmedaten derselben biometrischen Modalität, wobei das Kombinieren Merkmalsinfusionstechniken (430) nutzt;

Bestimmen (340), unter Nutzung der kombinierten extrahierten Merkmale für wenigstens das empfangene Bild und die Darstellung kombinierter Merkmale der Vielzahl von Quellbildern biometrischer Aufnahmedaten als Eingabe in ein zweites künstliches neuronales Netzwerk (440), ob das empfangene Bild der Quelle biometrischer Daten für den Nutzer aus einer echten Quelle biometrischer Daten oder einer Kopie der echten Quelle biometrischer Daten ist; und

Ergreifen (350) einer oder mehrerer Maßnahmen, um dem Nutzer Zugriff auf eine geschützte Ressource zu gestatten oder zu verwehren basierend auf der Bestimmung.

2. Verfahren nach Anspruch 1, das weiter Aggregieren von Merkmalen aufweist, die durch ein neuronales Netzwerk aus Information extrahiert werden, die aus einer Vielzahl von Quellbildern biometrischer Aufnahmedaten hergeleitet wird, in die kombinierte Merkmalsdarstellung der Vielzahl von Quellbildern biometrischer Aufnahmedaten.

3. Verfahren nach Anspruch 2, wobei die Merkmale, die aus der Information extrahiert werden, die aus der Vielzahl von Quellbildern biometrischer Aufnahmedaten hergeleitet wird, während einer Aufnahme einer biometrischen Authentifizierung eines Nutzers extrahiert werden; oder

wobei die Merkmale, die aus der Information extrahiert werden, die aus der Vielzahl von Quellbildern biometrischer Aufnahmedaten hergeleitet wird, Merkmale aufweist, die aus einer Darstellung extrahiert werden, die aus jedem der Vielzahl von Quellbildern biometrischer Aufnahmedaten hergeleitet wird.

4. Verfahren nach Anspruch 2, wobei Aggregieren von Merkmalen, die aus der Information extrahiert werden, die aus der Vielzahl von Quellbildern biometrischer Aufnahmedaten hergeleitet wird, in die kombinierte Merkmalsdarstellung, Folgendes aufweist:

Verketten von Merkmalen, die aus jedem der Vielzahl von Quellbildern biometrischer Aufnahmedaten extrahiert werden, in einen einzelnen Satz von Merkmalen; oder
Generieren einer Merkmalsausgabe basierend auf einem autoregressivem Modell und auf Merkmalen, die aus jedem der Vielzahl von Quellbildern biometrischer Aufnahmedaten extrahiert werden; oder
Generieren, aus den Merkmalen, die aus der Vielzahl von Quellbildern biometrischer Aufnahmedaten extrahiert werden, eines Mittelwerts und einer Standardabweichung, die mit den Merkmalen assoziiert ist, die aus der Vielzahl von Quellbildern biometrischer Aufnahmedaten extrahiert werden.

5. Verfahren nach Anspruch 2, wobei:

das erste künstliche neuronale Netzwerk und das zweite künstliche neuronale Netzwerk faltende bzw. konvolutionelle neuronale Netzwerke aufweisen, und
das erste künstliche neuronale Netzwerk wenigstens einen Subsatz von Gewichtungen teilt bzw. gemeinsam nutzt, die mit dem zweiten künstlichen neuronalen Netzwerk assoziiert sind.

6. Verfahren nach Anspruch 2, das weiter Extrahieren zusätzlicher Merkmale aus dem empfangenen Bild und der Vielzahl von Quellbildern biometrischer Aufnahmedaten aufweist, und zwar unter Nutzung eines konvolutionellen neuronalen Netzwerks mit gemeinsam genutzten Gewichtungen, der extrahierten Merkmale für das empfangene Bild und der Merkmale, die aus der Vielzahl von Quellbildern biometrischer Aufnahmedaten extrahiert werden.

7. Verfahren nach Anspruch 1, wobei Extrahieren von Merkmalen für wenigstens das empfangene Bild Folgendes aufweist:

Kombinieren des empfangenen Bildes und der Vielzahl von Quellbildern biometrischer Aufnahmedaten in einen Stapel bzw. Stack von Bildern; und
Extrahieren der Merkmale für das empfangene Bild und der Merkmale für jedes der Vielzahl von Quellbildern biometrischer Aufnahmedaten durch Verarbeiten des Stapels von Bildern durch das erste künstliche neuronale Netzwerk.

8. Verfahren nach Anspruch 7, wobei Kombinieren des empfangenen Bildes und der Vielzahl von Quellbildern biometrischer Aufnahmedaten in den Stapel von Bildern Folgendes aufweist:

Identifizieren, relativ zu wenigstens einem Bild der Vielzahl von Quellbildern biometrischer Aufnahmedaten, einer Transformation zum Anwenden auf das empfangene Bild, so dass das empfangene Bild mit wenigstens einem Teil des wenigstens einen Bildes der Vielzahl von Vielzahl von Quellbildern biometrischer Aufnahmedaten ausgerichtet ist;
Modifizieren des empfangenen Bildes basierend auf der identifizierten Transformation; und
Generieren eines Stapels, der das modifizierte empfangene Bild aufweist, und des wenigstens einen Bildes der Vielzahl von Quellbildern biometrischer Aufnahmedaten,
wobei Generieren des Stapels, der das modifizierte empfangene Bild und die Vielzahl von Quellbildern biometrischer Aufnahmedaten enthält, eines oder mehreres von Folgendem aufweist:

Stacking bzw. Stapeln des modifizierten empfangenen Bildes und des wenigstens einen Bildes der Vielzahl von Vielzahl von Quellbildern biometrischer Aufnahmedaten in einer Kanaldimension,
Subtrahieren des modifizierten empfangenen Bildes von dem wenigstens einen Bild der Vielzahl von Quellbildern biometrischer Aufnahmedaten;
Überlagern des empfangenen Bildes auf das wenigstens eine Bild der Vielzahl von Quellbildern biometrischer Aufnahmedaten,
Ausgeben einer Schnittmenge des modifizierten empfangenen Bildes und des wenigstens einen Bildes der Vielzahl von Quellbildern biometrischer Aufnahmedaten, oder
Transformieren des modifizierten empfangenen Bildes basierend auf einer gestitchten bzw. zusammengefügten Version der Vielzahl von Quellbildern biometrischer Aufnahmedaten.

9. Verfahren nach Anspruch 7, wobei Kombinieren des empfangenen Bildes und der Vielzahl von Quellbildern biometrischer Aufnahmedaten in den Stack bzw. Stapel von Bildern Folgendes aufweist:

Identifizieren, relativ zu dem empfangenen Bild, einer Transformation, die auf wenigstens ein Bild der Vielzahl von Quellbildern biometrischer Aufnahmedaten angewandt werden soll, so dass das empfangene Bild mit wenigstens einem Teil des wenigstens einen Bildes der Vielzahl von Quellbildern biometrischer Aufnahmedaten ausgerichtet ist;
Modifizieren des wenigstens einen Bildes der Vielzahl von Quellbildern biometrischer Aufnahmedaten basierend auf der identifizierten Transformation; und
Generieren eines Stapels, der das empfangene Bild und das modifizierte wenigstens eine Bild der Vielzahl von Quellbildern biometrischer Aufnahmedaten enthält,
wobei Generieren des Stapels, der das empfangene Bild und das modifizierte wenigstens eine Bild der Vielzahl von Quellbildern biometrischer Aufnahmedaten enthält, Folgendes aufweist:

Stapeln des empfangenen Bildes und des modifizierten wenigstens einen Bildes der Vielzahl von Quellbildern biometrischer Aufnahmedaten in einer Kanaldimension,
Subtrahieren des empfangenen Bildes von dem modifizierten wenigstens einen Bild der Vielzahl von Quellbildern biometrischer Aufnahmedaten,
Überlagern des empfangenen Bildes auf das modifizierte wenigstens eine Bild der Vielzahl von Quellbildern biometrischer Aufnahmedaten, oder
Ausgeben einer Schnittmenge des empfangenen Bildes und des modifizierten wenigstens einen Bildes der Vielzahl von Quellbildern biometrischer Aufnahmedaten.

10. Verfahren nach Anspruch 1, wobei Bestimmen, ob das empfangene Bild der Quelle biometrischer Daten für den Nutzer aus einer echten Quelle biometrischer Daten oder einer Kopie der echten Quelle biometrischer Daten ist, Berechnen einer Distanzmetrik aufweist, die das empfangene Bild und die Vielzahl von Quellbildern biometrischer Aufnahmedaten vergleicht, und/oder

wobei Bestimmen, ob das empfangene Bild der Quelle biometrischer Daten für den Nutzer aus einer echten Quelle biometrischer Daten oder einer Kopie der echten Quelle biometrischer Daten ist, Berechnen einer Log-Likelihood aufweist, dass das empfangene Bild eine echten Quelle biometrischer Daten ist, wenn ein Mittelwert und eine Standardabweichung gegeben sind, die mit den Merkmalen assoziiert sind, die aus der Vielzahl von Quellbildern biometrischer Aufnahmedaten extrahiert werden, und/oder
wobei Bestimmen, ob das empfangene Bild der Quelle biometrischer Daten für den Nutzer aus einer echten Quelle biometrischer Daten oder einer Kopie der echten Quelle biometrischer Daten ist, Gewichten der extrahierten Merkmale für das empfangene Bild und der Merkmale, die aus der Vielzahl von Quellbildern biometrischer Aufnahmedaten extrahiert werden aufweist, und zwar unter Nutzung einer Key-Query-Value-Attention-Layer bzw. Schlüssel-Anfrage-Wert-Attention-Schicht mit Key-Query-Value-Attention-Mechanismen bzw. Schlüssel-Anfrage-Wert-Attention-Merkmalen zwischen Query- und Enrollment-Merkmalen bzw. Anfrage- und Aufnahme-Merkmalen.

11. Verfahren nach Anspruch 1, wobei Bestimmen, ob das empfangene Bild der Quelle biometrischer Daten für den Nutzer aus einer echten Quelle biometrischer Daten oder einer Kopie der echten Quelle biometrischer Daten ist, Folgendes aufweist:

Einbetten der extrahierten Merkmale für das empfangene Bild in einen Anfrage-Vektor unter Nutzung eines ersten mehrschichtigen Perzeptrons bzw. Multi-Layer-Perzeptrons;
Einbetten der Merkmale, die aus der Vielzahl von Quellbildern biometrischer Aufnahmedaten extrahiert werden, in einen Schlüsselvektor unter Nutzung eines zweiten mehrschichtigen Perzeptrons;
Einbetten der Merkmale, die aus der Vielzahl von Quellbildern biometrischer Aufnahmedaten extrahiert werden, in einen Wertevektor unter Nutzung eines dritten mehrschichtigen Perzeptrons; und
Generieren eines Wertes, der einer Likelihood entspricht, dass das empfangene Bild aus einer echten Quelle biometrischer Daten ist, basierend auf einem inneren Produkt zwischen dem Query-Vektor bzw. Anfragevektor und dem Key-Vektor bzw. Schlüsselvektor, und zwar in Abhängigkeit von Merkmalen, die in den Query-Vektor bzw. Anfragevektor eingebettet sind.

**12.** Verfahren nach Anspruch 1, wobei Bestimmen, ob das empfangene Bild der Quelle biometrischer Daten für den Nutzer von einer echten Quelle biometrischer Daten oder einer Kopie der echten Quelle biometrischer Daten ist, Gating bzw. selektives Filtern an einem oder mehreren der extrahierten Merkmale hinsichtlich des empfangenen Bildes basierend auf Merkmalen von der Vielzahl von Quellbildern biometrischer Aufnahmedaten aufweist; oder wobei:

Bestimmen, ob das empfangene Bild der Quelle biometrischer Daten für den Nutzer von einer echten Quelle biometrischer Daten oder einer Kopie der echten Quelle biometrischer Daten ist, Gating der extrahierten Merkmale für das empfangene Bild in einem Squeeze-Excite-Netzwerk aufweist, und zwar basierend auf den Merkmalen, die aus der Vielzahl von Quellbildern biometrischer Aufnahmedaten extrahiert werden; wobei die extrahierten Merkmale durch eine Höhendimension bzw. Höhenabmessung, eine Breitendimension und eine Kanaldimension dargestellt werden; und das Gating in einer Kanaldimension durchgeführt wird.

**13.** Verfahren nach Anspruch 1, wobei das empfangene Bild der Quelle biometrischer Daten für den Nutzer ein Bild eines Fingerabdrucks des Nutzers aufweist, oder wobei das empfangene Bild der Quelle biometrischer Daten für den Nutzer ein Bild eines Gesichts des Nutzers aufweist.

**14.** Ein Verarbeitungssystem (1000), das Folgendes aufweist:

einen Speicher (1024), der von einem Computer ausführbare Instruktionen aufweist; und einen Prozessor (1002, 1104, 1006, 1008), der konfiguriert ist zum Ausführen der von einem Computer ausführbaren Instruktionen und zum Veranlassen des Verarbeitungssystems zum Durchführen des Verfahrens noch einem der Ansprüche 1-13.

**15.** Ein nicht transitorisches computerlesbares Medium, mit darauf gespeicherten Instruktionen, die, wenn sie durch einen Prozessor ausgeführt werden, den Prozessor veranlassen zum Durchführen des Verfahrens nach einem der Ansprüche 1-13.

**Revendications**

**1.** Procédé d'authentification biométrique, comprenant :

la réception (310) d'une image d'une source de données biométriques pour un utilisateur ; l'extraction (320), au moyen d'un premier réseau neuronal artificiel (410), de caractéristiques pour au moins l'image reçue ; la combinaison (330) des caractéristiques extraites pour l'au moins une image reçue et une représentation de caractéristiques combinées (420) d'une pluralité d'images de sources de données biométriques d'inscription d'une même modalité biométrique, la combinaison utilisant des techniques d'infusion de caractéristiques (430) ; la détermination (340), en utilisant les caractéristiques extraites combinées pour l'au moins une image reçue et la représentation des caractéristiques combinées de la pluralité d'images de sources de données biométriques d'inscription comme entrée dans un deuxième réseau neuronal artificiel (440), si l'image reçue de la source de données biométriques pour l'utilisateur provient d'une source de données biométriques réelle ou d'une copie de la source de données biométriques réelle ; et la prise (350) d'une ou de plusieurs mesures pour autoriser ou refuser à l'utilisateur l'accès à une ressource protégée sur la base de la détermination.

**2.** Procédé selon la revendication 1, comprenant en outre l'agrégation de caractéristiques extraites par un réseau neuronal à partir d'informations dérivées d'une pluralité d'images de sources de données biométriques d'inscription dans la représentation de caractéristiques combinées de la pluralité d'images de sources de données biométriques d'inscription.

**3.** Procédé selon la revendication 2, dans lequel les caractéristiques extraites à partir des informations dérivées de la pluralité d'images de sources de données biométriques d'inscription sont extraites pendant l'inscription d'authentification biométrique de l'utilisateur ; ou dans lequel les caractéristiques extraites à partir des informations dérivées de la pluralité d'images de sources de données biométriques d'inscription comprennent des caractéristiques extraites à partir d'une représentation dérivée de chacune de la pluralité d'images de sources de données biométriques d'inscription.

4. Procédé selon la revendication 2, dans lequel l'agrégation de caractéristiques extraites à partir des informations dérivées de la pluralité d'images de sources de données biométriques d'inscription dans la représentation de caractéristiques combinées comprend :

la concaténation de caractéristiques extraites à partir de chacune de la pluralité d'images de sources de données biométriques d'inscription en un seul ensemble de caractéristiques ; ou

la génération d'une sortie de caractéristiques sur la base d'un modèle autorégressif et des caractéristiques extraites à partir de chacune de la pluralité d'images de sources de données biométriques d'inscription ; ou

la génération, à partir des caractéristiques extraites à partir de la pluralité d'images de sources de données biométriques d'inscription, d'une moyenne et d'un écart type associés aux caractéristiques extraites à partir de la pluralité d'images de sources de données biométriques d'inscription.

5. Procédé selon la revendication 2, dans lequel :

le premier réseau neuronal artificiel et le deuxième réseau neuronal artificiel comprennent des réseaux neuronaux à convolution, et

le premier réseau neuronal artificiel partage au moins un sous-ensemble de poids associés au deuxième réseau neuronal artificiel.

6. Procédé selon la revendication 2, comprenant en outre l'extraction de caractéristiques supplémentaires à partir de l'image reçue et de la pluralité d'images de sources de données biométriques d'inscription à l'aide d'un réseau neuronal à convolution à poids partagé, les caractéristiques extraites pour l'image reçue et les caractéristiques extraites à partir de la pluralité d'images de sources de données biométriques d'inscription.

7. Procédé selon la revendication 1, dans lequel l'extraction de caractéristiques pour l'au moins une image reçue comprend :

la combinaison de l'image reçue et de la pluralité d'images de sources de données biométriques d'inscription dans une pile d'images ; et

l'extraction des caractéristiques pour l'image reçue et des caractéristiques pour chacune des pluralités d'images de sources de données biométriques d'inscription en traitant la pile d'images au moyen du premier réseau neuronal artificiel.

8. Procédé selon la revendication 7, dans lequel la combinaison de l'image reçue et de la pluralité d'images de sources de données biométriques d'inscription dans la pile d'images comprend :

l'identification, par rapport à au moins une image parmi la pluralité d'images de sources de données biométriques d'inscription, d'une transformation à appliquer à l'image reçue de sorte que l'image reçue soit alignée avec au moins une partie de l'au moins une image parmi la pluralité d'images de sources de données biométriques d'inscription ;

la modification de l'image reçue en fonction de la transformation identifiée ; et

la génération d'une pile comportant l'image reçue modifiée et l'au moins une image parmi la pluralité d'images de sources de données biométriques d'inscription,

dans lequel la génération de la pile comportant l'image reçue modifiée et la pluralité d'images de sources de données biométriques d'inscription comprend un ou plusieurs parmi :

l'empilement de l'image reçue modifiée et de l'au moins une image parmi la pluralité d'images de sources de données biométriques d'inscription sur une dimension de canal,

la soustraction de l'image reçue modifiée de l'au moins une image parmi la pluralité d'images de sources de données biométriques d'inscription,

la superposition de l'image reçue sur l'au moins une image parmi la pluralité d'images de sources de données biométriques d'inscription,

la fourniture en sortie d'une intersection de l'image reçue modifiée et de l'au moins une image parmi la pluralité d'images de sources de données biométriques d'inscription, ou

la transformation de l'image reçue modifiée sur la base d'une version assemblée de la pluralité d'images de sources de données biométriques d'inscription.

**9.** Procédé selon la revendication 7, dans lequel la combinaison de l'image reçue et de la pluralité d'images de sources de données biométriques d'inscription dans la pile d'images comprend :

l'identification, par rapport à l'image reçue, d'une transformation à appliquer au niveau d'au moins une image parmi la pluralité d'images de sources de données biométriques d'inscription de sorte que l'image reçue soit alignée avec au moins une partie de l'au moins une image parmi la pluralité d'images de sources de données biométriques d'inscription ;

la modification de l'au moins une image parmi la pluralité d'images de sources de données biométriques d'inscription en fonction de la transformation identifiée ; et

la génération d'une pile comportant l'image reçue et l'au moins une image modifiée parmi la pluralité d'images de sources de données biométriques d'inscription,

dans lequel la génération de la pile comportant l'image reçue et l'au moins une image modifiée parmi la pluralité d'images de sources de données biométriques d'inscription comprend :

l'empilement de l'image reçue et de l'au moins une image modifiée parmi la pluralité d'images de sources de données biométriques d'inscription sur une dimension de canal,

la soustraction de l'image reçue de l'au moins une image modifiée parmi la pluralité d'images de sources de données biométriques d'inscription,

la superposition de l'image reçue sur l'au moins une image modifiée parmi la pluralité d'images de sources de données biométriques d'inscription, ou

la fourniture en sortie d'une intersection de l'image reçue et de l'au moins une image modifiée parmi la pluralité d'images de sources de données biométriques d'inscription.

**10.** Procédé selon la revendication 1, dans lequel la détermination de si l'image reçue de la source de données biométriques pour l'utilisateur provient d'une source de données biométriques réelle ou d'une copie de la source de données biométriques réelle comprend le calcul d'une métrique de distance comparant l'image reçue et la pluralité d'images de source de données biométriques d'inscription, et/ou

dans lequel la détermination de si l'image reçue de la source de données biométriques pour l'utilisateur provient d'une source de données biométriques réelle ou d'une copie de la source de données biométriques réelle comprend le calcul d'une vraisemblance logarithmique selon laquelle l'image reçue est une source de données biométriques réelle, étant donné une moyenne et un écart type associés aux caractéristiques extraites à partir de la pluralité d'images de source de données biométriques d'inscription, et/ou

dans lequel la détermination de si l'image reçue de la source de données biométriques pour l'utilisateur provient d'une source de données biométriques réelle ou d'une copie de la source de données biométriques réelle comprend la pondération des caractéristiques extraites pour l'image reçue et les caractéristiques extraites à partir de la pluralité d'images de source de données biométriques d'inscription en utilisant une couche d'attention clef-requête-valeur avec des mécanismes d'attention clef-requête-valeur entre la requête et des caractéristiques d'inscription.

**11.** Procédé selon la revendication 1, dans lequel la détermination de si l'image reçue de la source de données biométriques pour l'utilisateur provient d'une source de données biométriques réelle ou d'une copie de la source de données biométriques réelle comprend :

l'incorporation des caractéristiques extraites pour l'image reçue dans un vecteur de requête à l'aide d'un premier perceptron multicouche ;

l'incorporation des caractéristiques extraites à partir de la pluralité d'images de sources de données biométriques d'inscription dans un vecteur clef à l'aide d'un deuxième perceptron multicouche ;

l'incorporation des caractéristiques extraites à partir de la pluralité d'images de sources de données biométriques d'inscription dans un vecteur de valeurs à l'aide d'un troisième perceptron multicouche ; et

la génération d'une valeur correspondant à une probabilité que l'image reçue provienne d'une source de données biométriques réelle en fonction d'un produit interne entre le vecteur de requête et le vecteur clef, conditionné par des caractéristiques intégrées dans le vecteur de requête.

**12.** Procédé selon la revendication 1, dans lequel la détermination de si l'image reçue de la source de données biométriques pour l'utilisateur provient d'une source de données biométriques réelle ou d'une copie de la source de données biométriques réelle comprend la sélection d'une ou de plusieurs des caractéristiques extraites pour l'image reçue sur la base de caractéristiques extraites à partir de la pluralité d'images de source de données biométriques d'inscription ; ou
dans lequel :

la détermination de si l'image reçue de la source de données biométriques pour l'utilisateur provient d'une source de données biométriques réelle ou d'une copie de la source de données biométriques réelle comprend la sélection des caractéristiques extraites pour l'image reçue dans un réseau de compression-excitation sur la base des caractéristiques extraites à partir de la pluralité d'images de sources de données biométriques d'inscription ; les caractéristiques extraites sont représentées par une dimension de hauteur, une dimension de largeur et une dimension de canal ; et
la sélection est effectuée sur la dimension du canal.

13. Procédé selon la revendication 1, dans lequel l'image reçue de la source de données biométriques pour l'utilisateur comprend une image d'une empreinte digitale de l'utilisateur, ou
dans lequel l'image reçue de la source de données biométriques pour l'utilisateur comprend une image d'un visage de l'utilisateur.

14. Système de traitement (1000), comprenant :

une mémoire (1024) comprenant des instructions exécutables par ordinateur ; et
un processeur (1002, 1104, 1006, 1008) configuré pour exécuter les instructions exécutables par ordinateur et amener le système de traitement à exécuter le procédé selon l'une quelconque des revendications 1 à 13.

15. Support non transitoire lisible par ordinateur sur lequel sont stockées des instructions qui, lorsqu'elles sont exécutées par un processeur, amènent le processeur à exécuter le procédé selon l'une quelconque des revendications 1 à 13.

**FIG. 1**

EP 4 320 606 B1

200

202 — Sample → 204 ASP Model → Live / Spoof Decision

210

212 — Sample → 216 ASP Model → Live / Spoof Decision

214 — Information about Subject and Sensor

**FIG. 2**

EP 4 320 606 B1

300

BEGIN

┌─310
Receive an image of a biometric data source for a user

┌─320
Extract, through a first artificial neural network, features for at least the received image

┌─330
Combine the extracted features for the at least the received image and a combined feature representation of a plurality of enrollment biometric data source images

┌─340
Determine, using the combined extracted features for the at least the received image and the combined feature representation of the plurality of enrollment biometric data source images as input into a second artificial neural network, whether the received image of the biometric data source for the user is from a real biometric data source or a copy of the real biometric data source

┌─350
Take one or more actions to allow or deny the user access to a protected resource based on the determination

END

*FIG. 3*

**FIG. 4**

EP 4 320 606 B1

FIG. 5

Feat Output 612

(MN)×1

M×1 Feat N  • • •  M×1 Feat 1

600B

Feat Output 634

M×1

632

Autoregressive Model

600D

M×1 Feat N  • • •  M×1 Feat 1

Visual Feat
(Query + Enroll)

604

CNN

602

(N+1) C × W × H

(1 Query + N Enroll)

600A

*FIG. 6*

622

μ

σ

624

M×2

600C

M×1 Enroll Feat N  • • •  M×1 Enroll Feat 1

FIG. 7

800A

M×1

Feat Query

802

$\chi$

M×1

Enroll Feat N

M×2

804

$\mu$

M×1

Enroll Feat 1

$\sigma$

806

M×1

808

$\log p(\chi|\mu, \sigma)$

$$\log p(\chi|\mu, \sigma) = -\log\sigma - \log\sqrt{2\pi} - \frac{(\chi - \mu)^2}{2\sigma^2}$$

*FIG. 8A*

FIG. 8B

800C

844

Feat Enroll

C×1     D×1

Squeeze

MLP   846

Intermediate Query Visual Features

842

W×H×C

⊙

848

C×1

850

W×H×C

Squeeze Excite Modules Inside the CNN

Query

CNN

Visual Feat (Query)

840

*FIG. 8C*

**FIG. 9**

EP 4 320 606 B1

1000

1014

| 1002 | CPU | WIRELESS CONNECTIVITY | 1012 |

| 1004 | GPU | SENSORS | 1016 |

| 1006 | DSP | ISPs | 1018 |

| 1008 | NPU | NAVIGATION | 1020 |

| 1010 | MULTIMEDIA | INPUT/OUTPUT | 1022 |

MEMORY — 1024

| 1024A | IMAGE FEATURE EXTRACTING COMPONENT | BIOMETRIC AUTHENTICITY DETERMINING COMPONENT | 1024C |

| 1024B | FEATURE REPRESENTATION COMBINING COMPONENT | USER ACCESS CONTROLLING COMPONENT | 1024D |

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 65857322
- US 63173267
- US 2020394289 A1
- US 2021009080 A1
- US 2020175290 A1